# EUROPEAN PATENT APPLICATION

(11) **EP 4 660 335 A1**
(43) Date of publication of application: **10.12.2025**
(21) Application number: 24926256.9
(22) Date of filing: 13.05.2024
(51) Int. Cl.: C22B 59/00, C22B 7/00, H01F 41/00

(54) **EFFICIENT PURIFICATION METHOD FOR RFEB OIL SLUDGE AND USE**

(30) Priority: 04.03.2024 CN 202410239924
(71) Applicant: Ningbo Institute of Materials Technology and Engineering, Chinese Academy of Sciences, Ningbo, Zhejiang 315201 (CN)
(72) Inventor: ZHOU, Qiaoying, Ningbo, Zhejiang 315201 (CN); GUO, Shuai, Ningbo, Zhejiang 315201 (CN); YAN, Aru, Ningbo, Zhejiang 315201 (CN)
(74) Representative: Winter, Brandl - Partnerschaft mbB
(86) International application number: PCT/CN2024/092810
(87) International publication number: WO 2025/184976

(57) **Abstract**

The present application discloses an efficient purification method and application of an RFeB-based oily sludge waste. R is one or more of rare earth elements. The method includes the following steps: placing a pretreated RFeB-based oily sludge waste in a vacuum gas rotary kiln into which inert gas is introduced, for primary purification at 100~300°C; and introducing purified gas into the vacuum gas rotary kiln when a vacuum degree of the vacuum gas rotary kiln reaches a set threshold, and performing secondary purification on the RFeB-based oily sludge waste subjected to the primary purification at 300~500°C. Through the technical solution of the present disclosure, an oil removal rate of the RFeB-based oily sludge waste is 95% or above (C and H contents in the oily sludge), an oxygen content of the sludge is reduced by about 60~80%, and there is almost no loss of the rare earth R and the like in the treatment process.

## Description

### CROSS REFERENCE TO THE RELATED APPLICATIONS

The present application is based upon and claims priority to Chinese patent application No. 2024102399240, filed with the China National Intellectual Property Administration on March 4, 2024 and entitled "Efficient Purification Method and Application of RFeB-based Oily Sludge Waste", the entire contents of which are incorporated herein by reference.

### TECHNICAL FIELD

The present application relates to the field of rare earth permanent magnet oily sludge waste retreatment technologies, and in particular to an efficient purification method and application of an RFeB-based oily sludge waste.

### BACKGROUND

Rare earth permanent magnetic materials (RFeB, where R is a rare earth element), with extremely high magnetic properties, excellent magnetic permeability, coercive force, remanence, and other characteristics, are widely used in the computer industry, the automobile industry, the instrument industry, the meter industry, the household appliance industry, the petrochemical industry, the medical care industry, the aerospace industry, and other industries. The rare earth permanent magnet materials will produce more wastes during production and processing, such as cutting wastes, grinding wastes, sintering wastes, oily sludge wastes, and the like. Among them, the oily sludge wastes are mainly formed by combining lubricating oil and coolants used in the cutting and grinding processes and cleaning agents used in the cleaning process with other wastes, accounting for 35-50% of a total amount of the wastes, resulting in serious waste of rare earth resources, and bringing serious pollution to the environment due to their long-term accumulation at the same time.

At present, a common industrial treatment method for the RfeB-based oily sludge waste is to add a large number of chemical reagents through a hydrometallurgical or pyrometallurgical process, and then perform roasting at a high temperature and purification to obtain rare earth oxides finally. This technology has the disadvantages of a long treatment process, a high cost, high energy consumption, high pollution, and a low added value of rare earth oxides recovered. At the same time, about 70% of metal oxide solid wastes of Fe, Co, Al, Cu, and the like will be produced after rare earth separation, resulting in huge waste of resources. There are also some treatment methods to prepare magnets by hydrogen pressurized crushing, pulverizing, and re-sintering, which have the defects of a long treatment cycle and high energy consumption.

At present, there are also treatment methods to prepare rare earth metals by crushing, oxidizing roasting and acid leaching, which use acidic reagents, such as hydrochloric acid, nitric acid, acetic acid, and oxalic acid, in the treatment process. Even weak acids can cause losses of the rare earth metals, Fe, and the like. There are also some treatment methods that use strong acids, strong alkalis, degreasing emulsifiers, chlorides and the like to clean the RFeB-based oily sludge wastes to remove oil stains and impurities in sludge. The use of alkaline reagents, such as sodium hydroxide, potassium hydroxide, alkaline inorganic salts, ammonium salts, degreasing agents and the like, will lead to losses of the rare earth metals. Furthermore, the degreasing emulsifiers used in the treatment process and their advanced derivatives mostly dissolve rare earth and the metal oxides. As cleaning waste liquid is lost, too many carbon impurities are introduced. By using the chlorides in the treatment process, it is difficult to remove the chloride ions from the sludge after their introduction, which is accompanied by the presence of the chloride ions in regenerated rare earth magnets in later preparation. When the magnet is damp or works in a warm and humid environment, the rare earth permanent magnet material will rapidly undergo self-corrosion, which brings unpredictable hidden dangers to the magnet itself and a device with the magnet.

### SUMMARY

Embodiments of the present application provide an efficient purification method and application of an RFeB-based oily sludge waste, in order to at least solve the above technical problems in the related art.

In a first aspect, an embodiment of the present application provides an efficient purification method of an RFeB-based oily sludge waste, where R is one or more of rare earth elements, and the method includes following steps:
placing a pretreated RFeB-based oily sludge waste in a vacuum gas rotary kiln into which inert gas is introduced, for primary purification at 100~300°C; and
introducing purified gas into the vacuum gas rotary kiln when a vacuum degree of the vacuum gas rotary kiln reaches a set threshold, and performing secondary purification on the RFeB-based oily sludge waste subjected to the primary purification at 300~500°C.

Furthermore, the primary purification may include:
raising a temperature of the vacuum gas rotary kiln, and introducing the inert gas into the vacuum gas rotary kiln until the temperature of the vacuum gas rotary kiln is stabilized at 100~300°C; and
continuously introducing the inert gas for 30~120 minutes to perform the primary purification on the pretreated RFeB-based oily sludge waste.

Furthermore, a flow volume of the inert gas may be 70~110 mL/min.

Furthermore, the secondary purification may include:
vacuumizing the vacuum gas rotary kiln until the vacuum degree in the vacuum gas rotary kiln reaches a set threshold, and setting a pressure of a pressure limiting valve of the vacuum gas rotary kiln as 1~2 atm;
raising a temperature of the vacuum gas rotary kiln, and introducing the purified gas into the vacuum gas rotary kiln until the temperature of the vacuum gas rotary kiln is stabilized at 300~500°C; and
continuously introducing the purified gas for 60~120 minutes to perform the secondary purification on the RFeB-based oily sludge waste subjected to the primary purification.

Furthermore, the purified gas may be mixed gas of hydrogen and the inert gas, and a volume ratio of the hydrogen to the inert gas may be (20:80)~(50:50).

Furthermore, a flow volume of the purified gas may be 30~70 mL/min.

Furthermore, the RFeB-based oily sludge waste may include at least one of pretreatment methods of drying, activation or pre-purification.

Furthermore, the activation may include:
adding a dried RFeB-based oily sludge waste and a diluent to an oily sludge mixture filtration device for stirring, to make the dried RFeB-based oily sludge waste be in a full contact to the diluent to achieve the activation.

Furthermore, based on volume percentage, the diluent may include at least two of 60~95 percent of an alcohol compound, 5~80 percent of a ketone compound or an ester compound, 5~10 percent of a petroleum derivative, or 5~40 percent of a weakly alkaline solution.

Furthermore, the alcohol compound may be a lower alcohol compound having no more than three carbon atoms.

Furthermore, the petroleum derivative may include at least one of gasoline or petroleum ether.

Furthermore, an amount of the diluent added may be 1~3 L/kg based on mass of the dried RFeB-based oily sludge waste.

Furthermore, a stirring rate may be 30~100 r/min, and a stirring time may be 30~120 minutes.

Furthermore, the pre-purification may include:
centrifuging and baking the RFeB-based oily sludge waste after the activation to achieve the pre-purification.

Furthermore, a baking temperature may be 40~50°C, and a baking time may be 1 hour~5 hours.

Furthermore, the RFeB-based oily sludge waste may be continuously baked at 40~50°C for 30-90 minutes in a stirring state.

Furthermore, centrifuging conditions may include: a centrifuging rate may be 150~380 r/min, and a centrifuging time may be 1 minute~10 minutes.

Furthermore, the oily sludge mixture filtration device may include:
a crate;
a mixing barrel arranged in the crate; a discharge channel communicating with an interior of the mixing barrel may be formed in a lower side of the mixing barrel;
a mixing basket, which is configured to contain the RFeB-based oily sludge waste and to be detachably connected with the crate;
a stirrer, which is arranged in the mixing barrel and configured to stir the RFeB-based oily sludge waste in the mixing barrel;
a driving motor, which is arranged on the crate above the mixing barrel, connected with the stirrer, and configured to drive the stirrer to rotate; and
a vibrating motor, which is arranged below the mixing barrel and configured to make the RFeB-based oily sludge waste in the mixing barrel to flow out through the discharge channel.

Furthermore, the oily sludge mixture filtration device may further include:
a spring; an end of the spring may be connected with a bottom of the mixing barrel, another end of the spring may be connected with a base, and the base may be configured to place the mixing barrel.

Furthermore, the oily sludge mixture filtration device may further include: a lifting assembly which is configured to control the base to lift up and down;
the lifting assembly may include: a traction rope, a pulley, a rotating shaft, and a motor; the motor may be fixed on the crate, an output shaft of the motor may be connected with the rotating shaft to drive the rotating shaft to rotate; a number of the pulley may be two, and two pulleys may be rotatably connected to the crate separately; the traction rope may be wound around the rotating shaft, an end of the traction rope may be fixed with the rotating shaft, and another end of the traction rope may be fixed with the base around the pulley.

Furthermore, the stirrer may include: a stirring shaft, a stirring disc, and stirring teeth; the stirring disc may be fixed at a lower end of the stirrer; the stirring teeth may be fixed in a circumferential direction of the stirring disc; and an axial direction of the stirring shaft may be parallel to an axial direction of the mixing barrel, and an upper end of the stirring shaft may be connected with the driving motor.

Furthermore, the vacuum atmosphere rotary kiln may include:
a box body;
a kiln body, which is transversely arranged in the box body, provided with a hollow cavity, and configured to place the RFeB-based oily sludge waste;
an intake chamber, communicating with an end of the kiln body; an axial line of the intake chamber may coincide with an axial line of the kiln body;
an exhaust chamber, communicating with another end of the kiln body; wherein an axial line of the exhaust chamber may coincide with an axial line of the kiln body; and
a driving device, which is arranged in the box body and configured to drive the kiln body to rotate;
a pressure reliever and a vacuometer may further be arranged above the kiln body; the pressure reliever may communicate with an interior of the kiln body to control a pressure in the kiln body; and the vacuometer may be configured to monitor a vacuum degree in the kiln body.

Furthermore, the kiln body may further be internally provided with a lifting plate of a spiral structure; an axial line of the lifting plate may coincide with an axial line of the kiln body, and two ends of the lifting plate may be fixed to inner walls at two ends of the kiln body respectively.

Furthermore, a jacking cylinder may further be arranged on a side wall of the box body; and a piston rod of the jacking cylinder may be connected with an end of the intake chamber or the exhaust chamber to drive the kiln body to tilt and pour out purified RFeB-based oily sludge waste in the kiln body.

In a second aspect, an embodiment of the present application provides RFeB-based oily sludge powder, which is prepared by using any one of the above efficient purification methods of the RFeB-based oily sludge waste.

In a third aspect, an embodiment of the present application provides application of RFeB-based oily sludge powder in an RFeB-based regenerated magnet.

The following beneficial effects can be obtained by treating an RFeB-based heavy oxidized oily sludge waste.

The pretreated RFeB-based oily sludge waste has the following effects: (1) organic molecules such as machining oil stains and a cutting fluid can be activated and then separated from surfaces of magnetic powder particles, which provides a better purification effect; (2) the purification process makes components of the oily sludge material more uniform, which is conductive to stability control on a subsequent process; (3) the technical solution of the present application does not involve multiple cleaning of the oily sludge waste, without causing losses of rare earth elements, Fe, and other elements, producing waste cleaning liquid, and adding an additional cost; (4) the technical solution of the present application will not introduce additional impurities and cause environmental pollution due to no need for use of a large number of chemical reagents; and (5) impurity removal with filtration can remove solid impurities mixed into the oily sludge material during machining.

Primary purification treatment is mainly for two-stage low-temperature volatilization treatment on the pretreated oily sludge slurry: (1) the first-stage low-temperature baking (with a temperature of the kiln body being 40~60°C, and a baking time being 1 hour~5 hours) is the pre-purification process, aiming to remove the diluent in the oily sludge slurry and the organic macromolecules that are separated from the surfaces of the magnetic powder particles, the rare earth, and metal oxides after activation; (2) in the second stage, assisting lifting plate stirring with a temperature (with the temperature of the kiln body being 100~300°C) further removes the diluent and organic molecules such as C, H, and O in the oily sludge material, as well as O on surfaces of some magnetic powder particles, rare earth and metal oxides; (3) the exhaust chamber of the kiln body is open in the two stages, which is more conducive to proceeding of the volatilization and purification processes; and (4) introducing the inert gas aims to prevent the purified magnetic powder particles from being oxidized again, and at the same time, to quickly discharge volatilize impurities from the kiln body.

Secondary purification treatment is to remove impurity gas and O in the kiln body by vacuumizing the kiln body after primary purification treatment on the oily sludge material: (1) the temperature of the kiln body is 300~500°C, and introducing the mixed gas of the hydrogen and the inert gas aims to completely remove C, H, and O from the oily sludge material in the form of compounds; (2) this process can also remove O on the surfaces of some magnetic powder particles, rare earth and metal oxides; and (3) in this process, arranging the pressure limiting valve on the kiln body aims to perform the purification process under the conditions of a constant temperature and a constant pressure, so as to keep stability of an atmosphere in the kiln and a change on a pressure in a reaction process.

Through the technical solution of the present application, an oil removal rate of the RFeB-based oily sludge waste is 95% or above (C and H contents in the oily sludge), an oxygen content of the sludge is reduced by about 60~80%, and there is almost no loss of the rare earth R and the like in the treatment process. So it is the key technical process for the preparation of regenerated RFeB-based magnetic powder and the regenerated RFeB-based magnet in the later stage.

### BRIEF DESCRIPTION OF THE DRAWINGS

In order to describe the technical solutions in embodiments of the present invention or in the related art more clearly, the drawings required to be used in the description for the embodiments or the related art will be briefly introduced below. Apparently, the drawings in the description below show merely some embodiments of the present invention, and those skilled in the art may still derive other drawings from these drawings without creative efforts.
FIG. 1 is a flowchart of an efficient purification method of an RFeB-based oily sludge waste according to an embodiment of the present application;
FIG. 2 is a structural diagram of an oily sludge mixture filtration device according to an embodiment of the present application;
FIG. 3 is a structural diagram of a mixing barrel and a base according to an embodiment of the present application;
FIG. 4 is a structural diagram of a mixing basket according to an embodiment of the present application;
FIG. 5 is a structural diagram of a stirrer according to an embodiment of the present application;
FIG. 6 is a structural diagram of a vacuum atmosphere rotary kiln for purification treatment on an oily sludge material according to an embodiment of the present application;
FIG. 7 is a structural diagram of a vacuum atmosphere rotary kiln for purification treatment on an oily sludge material in a starting state according to an embodiment of the present application;
FIG. 8 is a sectional structural diagram of a kiln body according to an embodiment of the present application;
FIG. 9 is a structural diagram of a vacuum atmosphere rotary kiln for purification treatment on an oily sludge material in a tilt/inclined state according to an embodiment of the present application;
FIG. 10 is an exterior view of an Nd-Fe-B oily sludge waste according to an embodiment of the present application;
FIG. 11 shows an optical microscopic morphology of an Nd-Fe-B oily sludge waste according to an embodiment of the present application;
FIG. 12 is an exterior view of a dried Nd-Fe-B oily sludge waste according to an embodiment of the present application; and
FIG. 13 is an exterior view of a purified Nd-Fe-B oily sludge waste according to an embodiment of the present application.

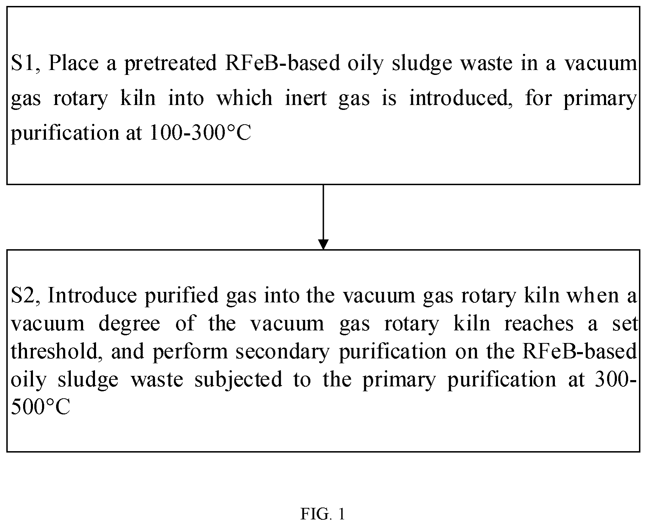

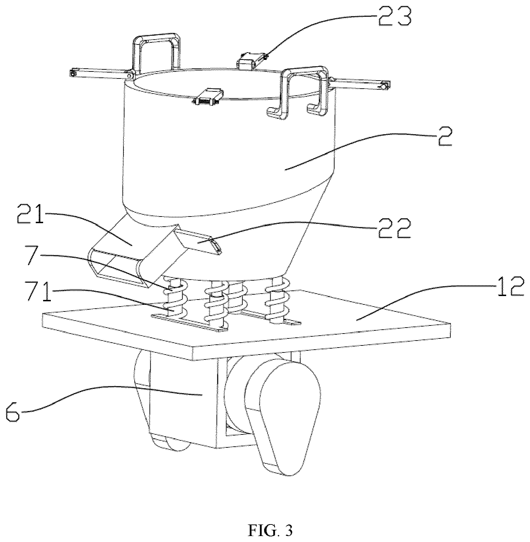

Reference numerals in the drawings: reference numerals of the oily sludge mixture filtration device shown in FIG. 1-FIG. 4: 1, crate; 11, door plate; 12, base; 121, guide rod; 13, limiting enclosure; 14, disc; 141, clamping block; 15, guide groove; 2, mixing barrel; 21, discharge channel; 22, inserting plate; 23, clamping piece; 3, mixing basket; 31, fastener; 4, stirrer; 41, stirring shaft; 42, stirring disc; 421, through hole; 43, stirring teeth; 5, driving motor; 6, vibrating motor; 7, spring; 71, telescoping column; 8, lifting assembly; 81, traction rope; 82, pulley; 83, rotating shaft; 84, lifting motor; and 9, control assembly.

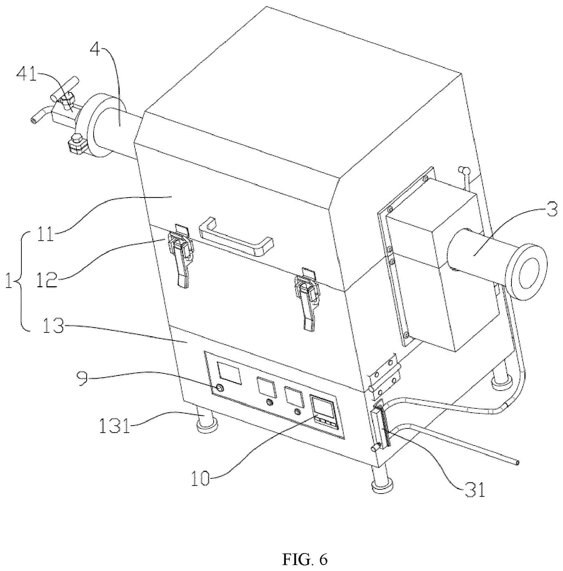

Reference numerals of the vacuum atmosphere rotary kiln for purification treatment on an oily sludge material shown in FIG. 6- FIG. 9: 1, box body; 11, upper box body; 12, middle box body; 13, lower box body; 131, supporting piece; 2, kiln body; 21, lifting plate; 3, intake chamber; 31, gas flowmeter; 4, exhaust chamber; 41, exhaust valve; 5, driving device; 51, motor; 52, gear; 53, gear ring; 6, pressure reliever; 7, vacuometer; 8, jacking cylinder; 9, actuation assembly; and 10, control assembly.

### DETAILED DESCRIPTION OF THE EMBODIMENTS

In order to enable those skilled in the art to better understand the solutions of the present application, the technical solutions in the embodiments of the present invention will be clearly and completely described below in conjunction with the accompanying drawings in the embodiments of the present invention. Apparently, the described embodiments are merely a part rather than all of the embodiments of the present invention. All other embodiments acquired by those skilled in the art without creative efforts based on the embodiments of the present application fall within a protection scope of the present application.

It should be noted that the terms "include/comprise", "have/has" and any variations thereof in the specification and the claims of the present application and in the above accompanying drawings are intended to cover non-exclusive inclusion. For example, processes, methods, systems, products or equipment that include a series of steps or units need not be limited to those steps or units that are clearly listed, but may include other steps or units that are not clearly listed or are inherent to those processes, methods, products or equipment.

Also, some of the above terms can be used to indicate other meanings in addition to the orientation or positional relationship. For example, the term "upper" may also be used to indicate a certain attachment or connection relationship in some cases. For those skilled in the art, specific meanings of these terms in the utility model can be understood according to specific circumstances.

A machining process of a rare earth permanent magnet, such as wire-electrode cutting, grinding machine, drilling, chamfering before electroplating and slicing, is prone to producing a heavily oxidized RFeB-based oily sludge waste. The heavily oxidized RFeB-based oily sludge waste contains a large amount of oxide components and higher oxide content than other types of wastes, where R refers to a rare earth element such as praseodymium (Pr), europium (Eu), neodymium (Nd) and the like. This kind of waste is oily sludge-like, highly viscous, and difficultly to be removed through a conventional physical treatment method. At present, a large number of chemical reagents are used in treatment on this kind of heavily oxidized oily sludge waste, which not only has a long treatment process, a high cost, high energy consumption, large pollution, introduction of new impurities and other defects, but also leads to a significant decrease in the content of rare earth elements and the like. Based on this, the present application provides an efficient purification method of an RFeB-based oily sludge waste.

As shown in FIG. 1 which is a flowchart of an efficient purification method of an RFeB-based oily sludge waste according to an embodiment of the present application, the method includes the following steps:
S1, Placing a pretreated RFeB-based oily sludge waste in a vacuum gas rotary kiln/furnace into which inert gas is introduced, for primary purification at 100~300°C.

The RFeB-based oily sludge waste has the main components of rare earth R and an iron oxide, and the oily sludge waste contains a large amount of machining oil, cutting fluid and grinding fluid. The purification of the RFeB-based oily sludge waste aims to remove oil and impurities from the RFeB-based oily sludge waste.

In one preferred implementation, the pretreated RFeB-based oily sludge waste refers to that obtained by using one or more treatment methods of drying, activation or pre-purification.

Since the RFeB-based oily sludge waste is usually a thin paste, in order to ensure a controlled effective quality (a net quality of the oily sludge material after liquid volatilization) of weighed oily sludge, it is necessary to dry the oily sludge waste. A specific method is as follows: the oily sludge is loaded into a stainless steel net disc (such as 40 centimeters * 40 centimeters) to be paved, and then the stainless steel net disc is placed in a circulating forced air oven for drying which can remove moisture and a small amount of oil stains in the oily sludge. In order to fully dry the oily sludge material, a thickness of the paved oily sludge material is generally not more than 5 centimeters, and it is set that an oven temperature is 100 ± 2°C and a drying time is 2 hours.

The dried RFeB-based oily sludge waste is activated, and an activation step includes:
adding a dried RFeB-based oily sludge waste and a diluent to an oily sludge mixture filtration device for stirring, to make the dried RFeB-based oily sludge waste be in a full contact to the diluent to achieve the activation. By volume percentage, the diluent includes at least two of 60~95 percent of an alcohol compound, 5~80 percent of a ketone compound or an ester compound, 5~10 percent of a petroleum derivative, or 5~40 percent of a weakly alkaline solution. The alcohol compound, and the ketone compound or the ester compound are used as a solvent for the diluent. The alcohol compound are preferably a lower alcohol such as ethanol, ethylene glycol, isopropanol and the like. The ketone compound or the ester compound includes butanone, ethyl acetate and the like. The petroleum derivative includes at least one of gasoline or petroleum ether. The weakly alkaline solution may be a low concentration of aqueous ammonia, such as an aqueous ammonia solution with a mass percentage of 1. The components of the above diluent are illustrative.

By fully contacting the dried RFeB-based oily sludge waste to the diluent, the diluent mainly has the following effects.
(1) The RFeB-based oily sludge waste directly purchased by a recycling plant generally has a high concentration; and adding the diluent can dilute the RFeB-based oily sludge waste to an appropriate concentration, which is conductive to improving subsequent purification treatment efficiency and operation safety.
(2) The RFeB-based oily sludge waste is highly viscous, and addition of the diluent can weaken its viscosity, which makes the oily sludge waste be easier transported, stirred, and treated in other ways.
(3) The diluent is conductive to dispersing solid particles in the RFeB-based oily sludge waste and reducing aggregation in the waste, making the waste be easier treated in a subsequent solid-liquid separation process (such as filtration or centrifugation).

Dilution and activation treatment on the oily sludge material is performed in the oily sludge mixture filtration device, which specifically includes: weighing the dried oily sludge material, pouring it into a mixing basket, and then adding a configured diluent to a mixing barrel, making particles of the oily sludge material be fully contacted and activated with the diluent under liquid conditions. The diluent is added to 1~3 litres per kilogram of oily sludge; and due to too few diluent, a viscosity of the oily sludge slurry is high, the particles of the oily sludge material cannot be fully contacted and activated with the diluent, impurities mixed in the oily sludge are difficultly filtered, and an oil removal effect is poor in a pre-purification process. Too many diluents need prolonging a pre-drying time of the oily sludge, resulting in further oxidation of the oily sludge material and introduction of impurities such as C at the same time, which affects the oil removal effect and increases energy consumption of equipment. Then, a stirring rate of a stirrer in the mixing barrel is set. In order to make the oily sludge material be fully contacted and activated with the diluent with uniform components, and prevent a slurry splashing due to a too fast stirring speed at the same time, it is set that the stirring rate is 30~100 rpm/min and a stirring time is 30~120 minutes; and the homogenized oily sludge slurry is measured by a paint viscometer #4 with a viscosity being 80~120 s.

In order to avoid a loss caused by the slurry remaining on the stirrer and the mixing basket, and remove the impurities (non-magnetic impurities mixed in a magnet machining process) mixed in the oily sludge material, after the slurry is stirred uniformly, stirring is stopped; and the stirrer is raised together with the mixing basket or the mixing barrel descends downward, so that the mixing basket is about 10 centimeters from a slurry liquid level in the mixing barrel. It is set that a centrifuging rate is 150~380 rpm/min, and a centrifuging time is 1 minute~10 minutes. The residual slurry on the mixing basket is thrown clean, and filter residues at a bottom of the mixing basket are the impurities in the RFeB-based oily sludge waste, and can be removed.

The activated RFeB-based oily sludge waste is baked to achieve the pre-purification. The oily sludge material in the mixing barrel is flushed clean, and a flushing fluid is poured into a kiln body together (with respect to treatment on clear liquid, due to a difference in source of the oily sludge material, there are large differences in types of machining oil, cutting fluid, grinding fluid and the like in the kiln body. Therefore, through analysis on the components of the clear liquid, when a content of rare earth and Fe in the clear liquid is less than 0.05%, the clear liquid is not needed to be poured into the kiln body, so as to shorten a baking time, reduce energy consumption, and the clear liquid can be reused as a diluent after recovery). It is suitable that a volume of the oily sludge material and the clear liquid is less than 1/2 of a volume of the interior of the kiln body. A kiln door is closed, an exhaust hole formed in the kiln door is opened, and it is set that a temperature of the kiln body is 40~60°C, and a baking time 1 hours~5 hours; and then the kiln body is driven to rotate at a rotating speed of 5~15 r/min, and baking is continued for 30~90 minutes under stirring of a lifting plate in the kiln body to achieve the pre-purification process. This process can remove the diluent in the oily sludge slurry and the organic macromolecules that are separated from the surfaces of the magnetic powder particles, the rare earth, and the metal oxides after activation.

Then, the temperature of the kiln body is raised to 100~300°C, and inert gas such as argon, nitrogen or the like is introduced at the same time. A flow volume is controlled at 70~110 ml/min. After the temperature is stable, the inert gas is continuously introduced for 30~120 minutes to achieve primary purification. This process can further remove the diluent in the oily sludge material and the organic macromolecules such as C, H, and O, and O on the surfaces of some magnetic powder particles, the rare earth and the metal oxides.

S2, Introducing purified gas into the vacuum gas rotary kiln when a vacuum degree of the vacuum gas rotary kiln reaches a set threshold, and performing secondary purification on the RFeB-based oily sludge waste subjected to the primary purification at 300~500°C.

The inert gas is stopped, the exhaust hole on the kiln door of an exhaust chamber is closed, and a mechanical pump and a diffusion pump are turned on to start vacuumizing the kiln body. When the vacuum degree reaches 10⁻⁴ Pa, the mechanical pump and the diffusion pump are turned off, a pressure limiting valve on the kiln body is opened, a pressure of the pressure limiting valve is set as 1~2 atm, and the purified gas is slowly introduced. The purified gas is hydrogen-argon mixed gas at a volume ratio of hydrogen to argon of (20:80)~(50:50), and a gas flow volume is controlled at 30~70 ml/min. Meanwhile, the temperature of the kiln body is raised to 300~500°C, and the hydrogen-argon mixed gas is continuously introduced after the temperature is stable, and a constant temperature and a constant pressure in the kiln body are kept for continuous treatment for 60~120 minutes. It is to be noted that the purified gas selected may also be the hydrogen solely.

After secondary purification treatment, kiln body heating and the gas are stopped, and the pressure limiting valve is turned off. When the temperature in the kiln is lower than 30±5°C, the inert gas is introduced again for protection, a kiln body tilting switch is turned on, and treated oily sludge powder is poured into a sealed stainless steel tank, and the treatment procedures of the RFeB-based oily sludge waste such as oil removal and impurity removal are completed.

Through the technical solution of the present application, an oil removal rate of the RFeB-based oily sludge waste is 95% or above (C and H contents in the oily sludge), an oxygen content of the sludge is reduced by about 60~80%, and there is almost no loss of the rare earth R and the like in the treatment process. So it is the key technical process for the preparation of regenerated RFeB-based magnetic powder and the regenerated RFeB-based magnet in the later stage.

In an example, the present application further provides RFeB-based oily sludge powder prepared by using the above purification method.

In an example, the present application further provides application of RFeB-based oily sludge powder in an RFeB-based regenerated magnet. According to the composition and property requirements of a required regenerated magnet, the purified RFeB-based oily sludge powder is mixed with other components (such as iron powder and boron powder) in an appropriate ratio to ensure that the obtained regenerated magnet has the required magnetic properties and microstructure. A mixture is pressed into a magnet green body in a required shape, which can be formed by cold isostatic pressing, injection molding, extrusion, or other methods. The magnet green body is sintered by using heat treatment to form a dense structure at a high temperature. During sintering, material particles are combined to form a final structure of the magnet, which has good magnetic properties. Finally, as specifically needed, the sintered magnet is subjected to necessary machining, grinding, dressing and other operations to achieve the required size and surface quality.

In one preferred implementation, since two devices that are the oily sludge mixture filtration device and the vacuum atmosphere rotary kiln used for the purification treatment on the oily sludge material can be used in the purification process of the present application. The following is a detailed description of the devices in combination with the accompanying drawings.

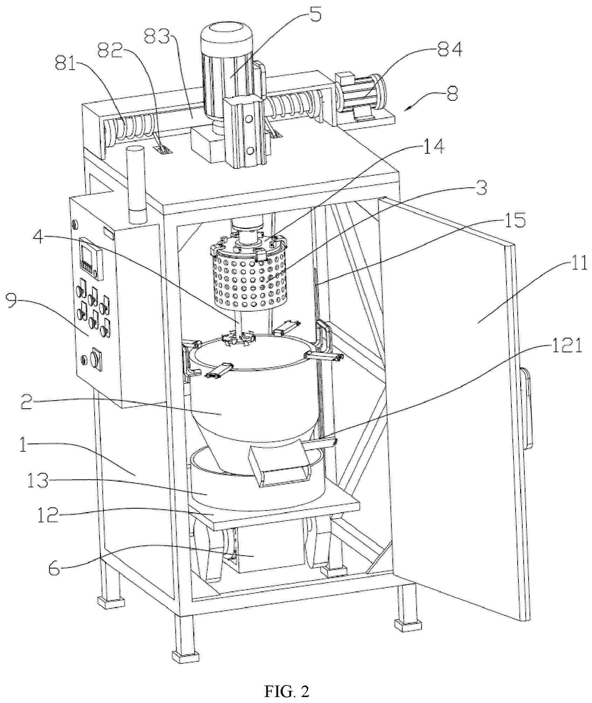

FIG. 2- FIG. 6 each shows a structural diagram of an oily sludge mixture filtration device according to an embodiment of the present application. The device includes: a crate 1, a mixing barrel 2, a mixing basket 3, a stirrer 4, a driving motor 5, and a vibrating motor 6.

As shown in FIG. 2, the crate 1 is of a hollow cuboid structure; an interior space of the crate 1 is configured to accommodate structure parts such as the mixing barrel 2 and the mixing basket 3; and other positions of the crate 1 also provide convenient conditions for mounting other parts of the device. A door plate 11 is also arranged on a side of the crate 1, and is connected with a side wall of the crate 1 through a hinge. The door plate 11 can be opened, closed, or completely disassembled, so that a user can more conveniently perform an experimental operation, or the user can be convenient to repair, mount, or replace hardware equipment. In addition, arranging the door plate 11 can also prevent dust and other debris from entering the mixing barrel 2 inside the crate 1.

In one preferred implementation, the mixing barrel 2 is arranged as a cylindrical container with an opening or a cover arranged on a top. The mixing barrel 2 can also be designed in a funnel shape. As shown in FIG. 2-FIG. 3, the mixing barrel 2 has a cylindrical upper portion and an inversely conical lower portion. Such arrangement is conductive to natural flow of the oily sludge material in a mixing process to improve a mixing effect. Due to a complex composition of the oily sludge material and a need for adding a chemical reagent to the mixing barrel 2, the mixing barrel 2 is made of stainless steel or other corrosion resistant materials, which is not limited in the present application.

A discharge channel 21 is formed in a bottom or a side surface of the mixing barrel 2 to facilitate discharge of the mixed oily sludge waste. The discharge channel 21 can be an opening or a discharge hole connected to a pipeline. A removable inserting plate 22 is mounted at the discharge channel 21 to control flow of the oily sludge waste. The inserting plate 22 can be an openable or closable gate, and a flow rate and a flow volume of the oily sludge material can be controlled by adjusting a position of the inserting plate 22. Moreover, in order to facilitate operation of the inserting plate 22, an operating rod or a handle can be mounted on the inserting plate 22. Through the operating rod or handle, the position of the inserting plate 22 can be easily adjusted to open or close the discharge channel 21. In order to prevent the oily sludge waste from leaking in the mixing process and ensure good sealing performance of the discharge channel 21 and the inserting plate 22, a rubber washer, a sealant, and other materials can be used to improve a sealing effect and prevent the oily sludge material from overflowing.

A handle is symmetrically fixed on a side wall of an upper end of the mixing barrel 2, which is convenient for an operator to move the mixing barrel 2, or for mechanical equipment to hoist the mixing barrel 2. A clamping piece 23 is further fixed to the side wall of the upper end of the mixing barrel 2, and is configured to fix the mixing barrel 2 and the mixing basket 3. In order to make the mixing barrel 2 be stably connected with the mixing basket 3, there may be a plurality of clamping pieces 23 arranged, for example, three clamping pieces are uniformly arranged in a circumferential direction of the mixing barrel 3; or four clamping pieces are uniformly arranged in the circumferential direction of the mixing barrel 3.

In one preferred implementation, a base 12 is arranged on a bottom surface of the crate 1, and is configured to place the mixing barrel 2. In order to prevent the mixing barrel 2 from being separated from the base 12, a limiting enclosure 13 is further fixed in a circumferential direction of the base 12. The base 12 is further configured to mount the vibrating motor 6. In this example, the vibrating motor 6 is fixed on the bottom surface of the base 12. Under the action of the vibrating motor 6, the oily sludge material filtered into the mixing barrel 2 can be fully and uniformly mixed with the diluent.

In one preferred implementation, a spring 7 is arranged on the bottom surface of the mixing barrel 2. An upper end of the spring 7 is fixed to the bottom surface of the mixing barrel 2, and a lower end of the spring 7 is fixed to the base 12. Arranging the spring 7 at a bottom of the mixing barrel 2 has a main function of providing power for stirring and mixing the materials. Specifically, the spring 7 can have the following effects.
1. Stirring and mixing: elasticity of the spring 7 can generate vibration force, making the oily sludge in the mixing barrel 2 be stirred and mixed, which can ensure that materials are fully and uniformly mixed together and improve mixing efficiency and quality.
2. Preventing the materials from caking: the vibration action of the spring 7 can prevent the oily sludge material from caking and accumulating at the bottom of the barrel, so that the oily sludge can keep in a loose state, which is very important for treating such viscous or easily caked oily sludge material.
3. Promoting fluidity: vibration of the spring 7 can improve fluidity of the oily sludge and weaken adhesiveness of the oily sludge.

In order to improve the effect of the spring 7, a plurality of springs 7 can be uniformly arranged on the bottom surface of mixing barrel 2. Moreover, in order to prevent the spring 7 from tilting during vibration, a telescoping column 71 is arranged inside the spring 7, that is, the spring 7 is sleeved on the telescoping column 71, and the telescoping column 71 can play a guiding role. An upper end of the telescoping column 71 is connected with the bottom surface of the mixing barrel 2, and a lower end of the telescoping column 71 is connected with the base 12.

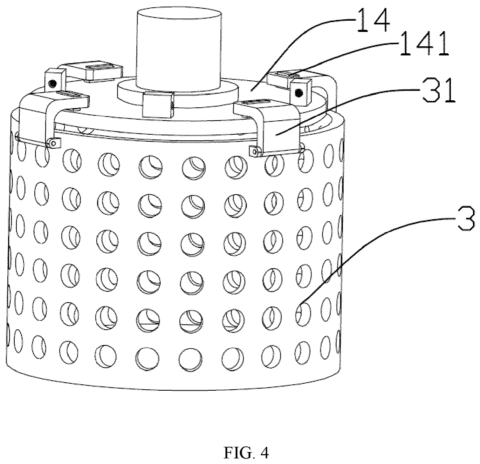

The mixing basket 3 is configured to contain the oily sludge material, which can conveniently mix and filter the oily sludge material. The mixing basket 3 can be arranged to be cylindrical, cuboid, and the like. The mixing basket 3 is made of a stainless steel net or other corrosion resistant material nets. A size of a mesh can be determined according to a size of the oily sludge material. As shown in FIG. 2 and FIG. 4, the mixing basket 3 is cylindrical, and is made of the stainless steel net with a mesh diameter being 2500 meshes.

In order to facilitate mounting of the mixing basket 3, a disc 14 is arranged inside the crate 1, is arranged horizontally, and is connected and matched with the mixing basket 3 in a clamping manner. For example, a clamping block 141 is arranged on an end surface, close to the mixing basket 3, of the disc 14, and a fastener 31 connected and matched with the clamping block 141 in the clamping manner is arranged at an upper end of the mixing basket 3. The fastener 31 can also be arranged on the disc 14, and the clamping block 141 can be arranged on the mixing basket 3. The disc 14 and the mixing basket 3 can also be connected by other detachable methods, which is not limited in the present application.

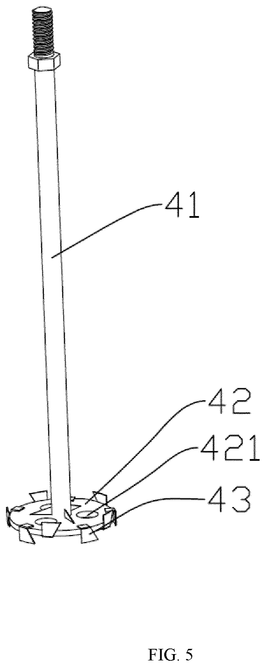

FIG. 5 shows a structural diagram of a stirrer 4. The stirrer 4 includes a stirring shaft 41, a stirring disc 42, and stirring teeth 43. An axial direction of the stirring shaft 41 is parallel to that of the mixing barrel 2. An upper end of the stirring shaft 41 is inserted into a variable shrinkage hole of a driving motor 5, and the stirring shaft 41 is fixed by screwing a screw. The stirring disc 42 is located at a distal end of the stirring shaft 41, and its shape and size can be designed according to a specific mixing requirement. The stirring disc 42 can be flat, spiral or propelled to generate a stirring effect and promote mixing of the materials. In this example, the stirring disc 42 is flat. A through hole 421 is formed in the stirring disc 42, and is configured to weaken resistance of a fluid in the mixing barrel to the stirring disc 42. The stirring teeth 43 are fixed on a side wall of the stirring disc 42. A plurality of stirring teeth 43 are uniformly arranged in a circumferential direction of the stirring disc 42, and are not exactly the same in extension direction. For example, the adjacent stirring teeth 43 can be arranged in opposite extension directions to improve shearing and stirring effects of the oily sludge material during mixing.

As shown in FIG. 2, the driving motor 5 is configured to drive the stirrer 4 and the mixing basket 3 to rotate. In an example, there may be one driving motor 5 arranged The driving motor 5 is connected with the stirrer 4 and the mixing basket 3 through the disc 14, and drives the stirrer 4 and the mixing basket 3 to rotate at the same time. In another example, there may be two driving motors 5 arranged. One of the driving motors 5 is connected with the stirrer 4 to control rotation of the stirrer 4. The other driving motor 5 is connected with the disc 14 to control rotation of the mixing basket 3. In this way, the stirrer 4 and the mixing basket 3 can be separately controlled.

In one preferred implementation, if mixing is completed, it is necessary to keep certain height differences between the stirrer 4 and a liquid level in the mixing barrel 2 as well as between the mixing basket 3 and the liquid level in the mixing barrel in order to centrifuge and dry the oily sludge material adhered in the stirrer 4 and the mixing basket 3. The device is further provided with a lifting assembly 8, and the lifting assembly 8 is configured to drive the base 12 to lift. After the base 12 descends by a certain distance, there is a height difference between the liquid level in the mixing barrel 2 and the mixing basket 3.

As shown in FIG. 2, the lifting assembly 8 includes a traction rope 81, a pulley 82, a rotating shaft 83, and a lifting motor 84. The lifting motor 84 is fixed on a side wall of an upper side of the crate 1, and the rotating shaft 83 is rotatably arranged on a top surface of the crate 1. An output shaft of the lifting motor 84 is connected with the rotating shaft 83 to drive the rotating shaft 83 to rotate. There are two pulleys 82 which are rotatably connected to a bottom surface of a top cover of the crate 1 respectively; and the traction rope 81 is wound around the rotating shaft 83, having an end fixed with the rotating shaft 83 and the other end going around the pulleys 82 and fixed with the base 12.

In one preferred implementation, the lifting assembly 8 may further be a cylinder, and the cylinder is connected with the base 12 to lift the base 12 up and down. The lifting assembly 8 may further include a sprocket and a chain. Cooperation of the sprocket and the chain drives the base 12 to lift up and down. The present application does not limit a specific structure and an implementation of the lifting assembly 8, as long as the base 12 can be lifted up and down.

In one preferred implementation, in order to prevent the base 12 from shaking during lifting and improve a lifting effect of the base 12, a guide groove 15 is formed in an inner wall of the crate 1, being in an opening direction the same as a lifting direction of the base 12; and meanwhile, the base 12 is fixedly provided with a guide rod 121 slidably matched with the guide groove 15. When there is a need for lifting the base 12, the lifting motor 84 starts, the output shaft of the lifting motor 84 drives the rotating shaft 83 to rotate, and under a tension of the traction rope 81, the base 12 achieves the lifting process. In this process, due to cooperation of the guide rod 121 and the guide groove 15, the base 12 can be lifted up and down smoothly without shaking.

In one preferred implementation, the device further includes a control assembly 9 arranged on the side wall of the crate 1. As shown in FIG. 1, the control assembly 9 may include a start/stop button, a rotating speed adjustment button, a steering option button, a duration setting button and other buttons, which can provide a more intuitive and clear control operation for the user. The arranged control assembly 9 can be configured to control startup and shutdown of the driving motor 5, the vibrating motor 6, and the lifting motor 84, and can further be configured to control a rotating speed, a rotating direction and the like of the driving motor 5. The control assembly 9 can further be configured to control switching in vibration mode of the vibrating motor 6, or controlling a rotating speed of the vibrating motor 6 to achieve a required vibration intensity and frequency. The control assembly 9 can further be configured to control a rotating speed of the lifting motor 84 to control a lifting stroke.

FIG. 6-FIG. 9 each shows a structural diagram of a vacuum atmosphere rotary kiln for purification treatment on an oily sludge material according to an embodiment of the present application. The vacuum atmosphere rotary kiln includes a box body 1, a kiln body 2, an intake chamber 3, an exhaust chamber 4, a driving device 5, a pressure reliever 6, and a vacuometer 7.

The box body 1 of the vacuum atmosphere rotary kiln is usually made of a high temperature resistant and corrosion resistant material, such as stainless steel or other alloy materials. Moreover, in order to keep a temperature in the vacuum atmosphere rotary kiln stable and reduce an energy loss, an insulation layer is arranged in the box body 1 of the rotary kiln. The insulation layer can be filled or covered with ceramic fibers, an insulation plate, and other materials to provide good thermal isolation performance.

As shown in FIG. 6, the box body 1 is of an open-close type structure, including three parts: an upper box body 11, a middle box body 12, and a lower box body 13. A side of the upper box body 11 is connected with a side of the middle box body 12 through a hinge, and the other side of the upper box body 11 is fixedly connected with the other side of the middle box body 12 through a fastener. In order to facilitate opening of the upper box body 11, a handle can be fixed to a side wall of the upper box body 11 to facilitate an operation by the operator. A side of the middle box body 12 is connected with a side of the lower box body 13 through a hinge. It is to be noted that the hinge for connecting the middle box body 12 with the lower box body 13 and the hinge for connecting the upper box body 11 and the middle box body 12 are not on the same side, that is, an opening-closing direction of the upper box body 11 is different from that of the middle box body 12. A supporting piece 131 is fixed around a bottom of the lower box body 13. On the one hand, the supporting part 131 plays a supporting role in the whole vacuum atmosphere rotary kiln; and on the other hand, it can also prevent the box body 1 from making a direct contact to the ground.

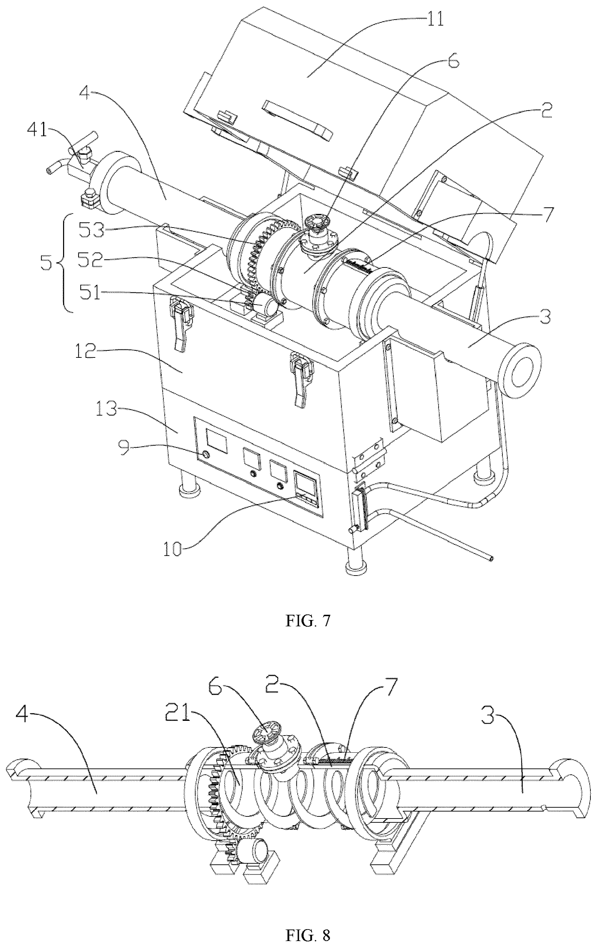

As shown in FIG. 7, the kiln body 2 is transversely arranged in the box body 1, and is rotatably connected with the interior of the upper box body 11. The kiln body 2 has a first end and a second end, the first end of the kiln body 2 communicates with the intake chamber 3, and the second end of the kiln body 2 communicates with the exhaust chamber 4.

In one preferred implementation, the kiln body 2, the intake chamber 3, and the exhaust chamber 4 are integrally formed, and a cross-sectional area of the kiln body 2 is larger than those of the intake chamber 3 and the exhaust chamber 4. A total length of the kiln body 2, the intake chamber 3, and the exhaust chamber 4 is a length of the rotary kiln, and a length of the kiln body 2 accounts for at least 1/2 of the length of the whole rotary kiln. Since the kiln body 2 accounts for a half of the length of the rotary kiln, a large length of the kiln body 2 can provide a larger heating area and insulation area, which can reduce the energy loss and improve the energy efficiency of the rotary kiln. Moreover, through the larger length of the kiln body 2, a more sufficient reaction time and contact area can be achieved. The oily sludge material is treated for a longer time in the kiln body 2, and there are more opportunities to fully react with the purified gas, thereby improving a purification effect of the oily sludge material.

In one preferred implementation, a height from a lower bottom of the kiln body 2 to a bottom of the intake chamber 3 is 1/3 of a vertical height of the kiln body 2. Such arrangement has the advantages that on the one hand, a more uniform airflow distribution can be achieved, which is conductive to making the gas flow uniformly inside the kiln body 2 and avoiding local overheating or cooling; and on the other hand, it can make the purified gas be fully contacted to the oily sludge material after the purified gas enters the kiln body 2, which improves the purification effect and mass transfer efficiency during treatment.

In one preferred implementation, the kiln body 2 includes heating regions and a constant temperature region. For example, two ends of the kiln body 2 are the heating regions, and a middle portion of the kiln body 2 is the constant temperature region. Each heating region is provided with a heating element, such as a resistance wire, a heating tube or other forms of heating devices, which is not limited in the present application. These heating devices make the temperature of the kiln body 2 be raised to a required operating temperature by means of current conduction or radiation heating. The constant temperature region is configured to keep a stable operating temperature. In the constant temperature region, an insulation material is usually used to reduce the energy loss and ensure that the interior temperature remains at a required constant level. This region usually has good thermal isolation performance to prevent heat transfer outward. For example, in the embodiment, the kiln body 2 is made of a high-purity alumina fiber material, so as to isolate an aging damage of other devices on the kiln body 2 caused by high-temperature heat conduction, and meanwhile, to provide good thermal stability of the kiln body 2 with energy conservation and consumption reduction.

FIG. 8 shows a cross-section diagram of the kiln body 2. A lifting plate 21 is further arranged in the kiln body 2 and is configured to stir an Nd-Fe-B oily sludge waste in the kiln body 2. An axial direction of the lifting plate 21 is the same as that of the kiln body 2. During rotation of the kiln body 2, the lifting plate 21 can stir the oily sludge waste in the kiln body 2, making the oily sludge material be fully contacted to the purified gas, so that the oily sludge material can be fully purified in the kiln body 2. Moreover, a design of the lifting plate 21 can further improve a flow pattern of the gas in the kiln body. For example, the lifting plate 21 can help disperse paths of gas flow and weaken airflow resistance, so as to achieve more uniform gas distribution and better purification effect.

The lifting plate 21 can be arranged to be flat, spiral, conical, trapezoidal, wavy, and other shapes. In the solution, the spiral lifting plate 21 is preferred. Due to the design of the spiral shape, the spiral lifting plate 21 can push the oily sludge waste upward along a spiral path, which is conductive to achieving a better mixing effect, so that the oily sludge waste is more fully contacted and interacted with the purified gas, and reaction efficiency and the purification effect are improved. Moreover, the spiral lifting plate 21 generates shear force and the stirring effect in rotary motion, which further promotes mixing and stirring inside the oily sludge material, is conductive to uniformly distributing the temperature and the components, and achieves more uniform reaction and purification results during treatment. Finally, the spiral shape of the spiral lifting plate 21 increases its surface area, which can provide a larger heat conduction contact surface, thereby accelerating heat energy transfer and the heating rate of the oily sludge material, which is conductive to increasing the treatment efficiency and an energy utilization rate.

The intake chamber 3 is configured to introduce external gas, for example, nitrogen, the argon, oxygen, carbon dioxide, the hydrogen, and other gas can be introduced into the intake chamber 3. Through the intake chamber 3, an operator can control and adjust parameters, such as a type, a flow volume and a pressure, of gas entering the kiln body 2. In order to facilitate adjustment and monitoring of the flow volume of the gas entering the intake chamber 3. As shown in FIG. 6-FIG. 7, an intake pipe of the intake chamber 3 is connected with a gas flowmeter 31 which is fixed on a side wall of the lower box body 13. For example, the flow volume of the purified gas is set as 60-600 ml/min. In this example, a three-way gas flowmeter 31 can be selected. The three-way gas flowmeter 31 has a gas inlet and two gas outlets. The gas inlet is configured to connect to a gas source, while the gas outlets are configured to measure forward and reverse flow of the gas respectively.

The exhaust chamber 4 is configured to discharge exhaust gas produced during treatment. Through the exhaust chamber 4, the exhaust gas can be safely collected and exported to a suitable treatment system, such as purification equipment or an exhaust gas treatment device. An exhaust valve 41 is further formed in a kiln door of the exhaust chamber 4, and is preferably of an external rotation type. The exhaust valve 41 is configured to control adjustment on emission and the flow volume of the exhaust gas in the kiln body 2. By opening or closing the exhaust valve 41, the operator can adjust gas flow in the exhaust chamber 4 and control the pressure and an atmosphere environment inside the kiln body 2.

As shown in FIG. 7, the driving device 5 configured to drive the kiln body 2 to rotate is further arranged in the box body 1. For example, the driving device 5 controls a rotating speed of the kiln body 2 as 5-15 r/min. In an example, the driving device 5 includes a motor 51, a gear 52, and a gear ring 53; and the motor 51 is fixed in the middle box body 12. The gear ring 53 is sleeved on a peripheral side wall of the intake chamber 3 or the exhaust chamber 4. An output shaft of the motor 51 is connected with the gear 52, or the motor 51 and the gear 52 can also be connected through a reduction box; and the gear 52 is engaged with the gear ring 53. The above is only an example of the driving device 5. The driving device 5 can further drive other transmission devices through the motor 51 to achieve rotation of the kiln body 2, for example, through cooperation between the sprocket and the chain, or cooperation between a belt pulley and a belt. A rotating part can also be driven by a hydraulic system to rotate, and then drive the kiln body 2 to rotate. The present application does not limit a specific form of the driving device 5.

As shown in FIG. 8, the pressure reliever 6 is arranged above the kiln body 2. In an example, the pressure reliever 6 includes a pressure relief valve which is of an external rotation type. The pressure relief valve is connected with the kiln body 2, so as to monitor and control the pressure in the rotary kiln. When the pressure exceeds a set value, the pressure relief valve automatically releases gas to prevent the interior pressure from raising to a dangerous level, which is conductive to preventing safety risks such as explosions, equipment damages, personal injuries and the like. For example, the pressure of the pressure limiting valve is set as 1-2 atm. When the pressure of the pressure limiting valve exceeds this set value, the pressure relief valve will automatically release the gas.

Connection between the pressure relief valve and the kiln body 2 can be implemented in such a way that a flange is mounted on the kiln body 2, then the pressure relief valve is connected with the kiln body 2 through the flange. A sealing washer and a bolt are used at flange connection of the flange to ensure sealing performance and stability of connection. A welded interface can also be reserved inside the kiln body 2, and the pressure relief valve is connected to the interface by welding. The kiln body 2 and the pressure relief valve can also be both provided with appropriate thread interfaces, and the pressure relief valve is in direct threaded connection to a threaded hole in the kiln body 2, and it is only needed to seal thread connection. The above is an example of connection between the pressure relief valve and the kiln body 2, which is not limited in the present application.

The vacuometer 7 is also arranged above the kiln body 2. The vacuometer 7 can be configured to monitor the vacuum degree in the rotary kiln in real time. The vacuometer 7 provides accurate measurement on the gas pressure in a working environment, so that the operator can understand a vacuum level of the system. For example, the vacuum degree can be set as 10⁻¹ - 10⁻⁴ Pa.

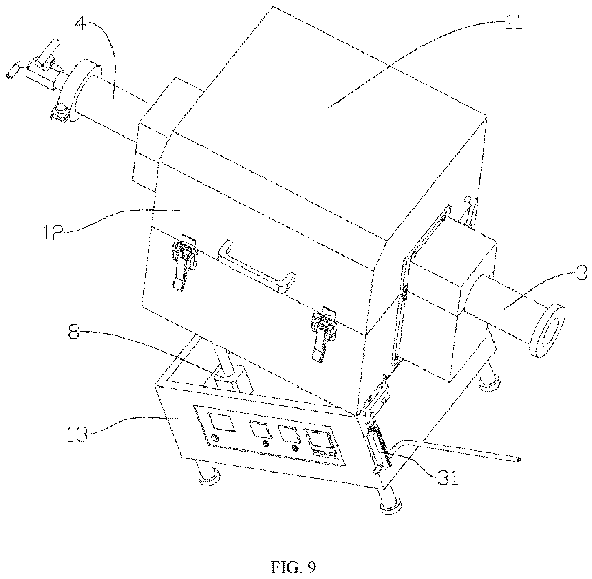

In one preferred implementation, after the oily sludge material in the kiln body 2 is purified, in order to conveniently take the purified oily sludge material out of the kiln body 2, a jacking cylinder (jack-raising cylinder) 8 is further arranged inside the lower box body 13. As shown in FIG. 9, the jacking cylinder 8 is fixed in the lower box body 13, a piston rod of the jacking cylinder 8 is rotatably connected with a bottom of the middle box body 12. The jacking cylinder 8 starts, the middle box body 12 is turned upward and lifted up with a hinge side as a rotating shaft, the kiln body 2 in the upper box body 11 is driven to tilt at the same time, a receiving device is arranged at an outlet of the exhaust chamber 4, and then the purified oily sludge material can be recovered.

As shown in FIG. 6-FIG. 7, the vacuum atmosphere rotary kiln further includes an actuation assembly 9 which is arranged on a side wall of the lower box body 13 and can be configured to control startup of the motor 51 and the jacking cylinder 8. For example, the actuation assembly 9 can include a start button, a stop button, an emergency stop button and other buttons with different functions. By pressing the start button, a start signal can be sent to trigger operation of related equipment and mechanical parts. The emergency stop button is configured to quickly stop operation of the kiln body 2 in an emergency. In a case of an accident or a dangerous situation, it only needs to press the emergency stop button to immediately cut off a power supply and stop operation of the kiln body 2.

The control assembly 10 is further arranged on the side wall of the box body 1. For example, the control assembly 10 includes a temperature controller which is configured to monitor and control a temperature inside the kiln body 2. An adjuster can be deployed on the side wall of the box body 1, and a temperature sensor can be arranged inside the box body 1. The temperature of the kiln body 2 in the box body 1 can be automatically adjusted according to a set temperature range to keep the temperature in the kiln body 2 stable.

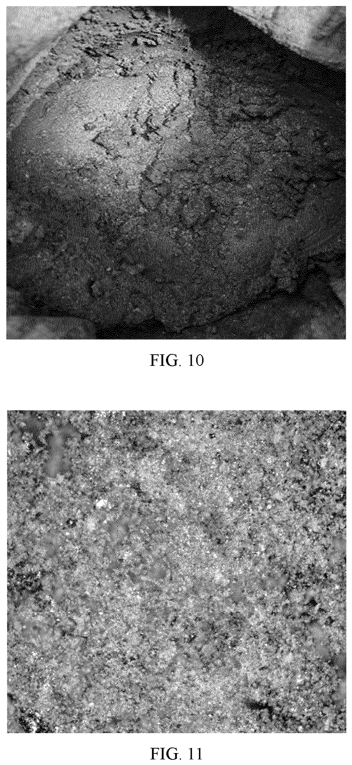

The following is a detailed description of the efficient purification method of the RFeB-based oily sludge waste of the present application in combination with specific embodiments. Taking the RFeB-based oily sludge waste being the Nd-Fe-B oily sludge waste as an example, contents of various components in the Nd-Fe-B oily sludge waste are shown in Table 1. FIG. 10 shows an exterior view of an Nd-Fe-B sludge oily waste; and FIG. 11 shows an optical microscopic morphology of an Nd-Fe-B oily sludge waste.

### Embodiment 1

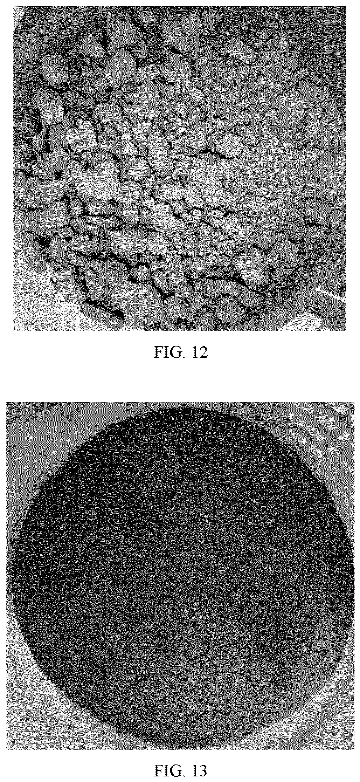

An efficient purification method of an Nd-Fe-B oily sludge waste includes:
step 1, loading a thin pasty Nd-Fe-B oily sludge material into a stainless steel net disc (40 centimeters * 40 centimeters) for paving, and then placing the stainless steel net disc in a circulating forced air oven for drying; a thickness of the oily sludge material is not more than 5 centimeters, it is set that an oven temperature is 100±2°C and a drying time is 2 hours, and an appearance of the dried Nd-Fe-B oily sludge waste is shown in FIG. 12;
step 2, weighing 5 kilograms of the dried oily sludge material, pouring it into the mixing barrel and the mixing basket, and weighing 60 percent of ethanol and 40 percent of butanone solution (both the solutions based on volume percentage, unless otherwise noted) as a diluent with a total volume being 15 litres (9 litres of the ethanol and 6 litres of the butanone solution);
step 3, setting a rate of the stirrer in the mixing barrel as 30 rpm/min and a stirring time as 30 minutes, slowly adding the diluent, starting the stirrer at the same time, and performing stirring while adding the diluent to make the oily sludge material be uniformly mixed under liquid conditions;
step 4, measuring a viscosity of the oily sludge slurry by a paint viscometer #4 as 80 seconds after uniform mixing of the oily sludge material;
step 5, shutting down the stirrer, separating the mixing basket from the mixing barrel, fixing the mixing basket to the disc below the driving motor, descending the mixing barrel by 10 centimeters to make the mixing basket be about 10 centimeters from a liquid level of a slurry in the mixing barrel, setting that a centrifuging rate of the mixing basket is 150 rpm/min and a centrifuging time is 1 minute, and throwing clean the residual slurry on the mixing basket; filter residues at a bottom of the mixing basket are impurities in the oily sludge slurry;
step 6, leaving the uniform oily sludge slurry filtered in the mixing barrel for still standing for 1 hour, pouring out upper clear liquid, charging the bottom oily sludge material into the kiln body of the vacuum atmosphere rotary kiln, flushing the oily sludge material in the mixing barrel clean by using the clear liquid for many times, and pouring a flushing fluid into the kiln body together (herein treatment on the clear liquid can be poured into the kiln body according to contents of rare earth and Fe in the clear liquid, or recovered and then reused as a diluent for reutilization); it is suitable that a volume of the oily sludge material and the clear liquid is less than 1/2 of a volume in the kiln body;
step 7, closing the kiln door of the exhaust chamber, opening the exhaust hole (i.e. the exhaust valve) formed in the kiln door of the exhaust chamber, and setting that a temperature of the kiln body is 40°C and a baking time is 1 hour;
step 8, turning on a rotary switch of the kiln body, starting the driving device to drive the kiln body to rotate, and continuously baking for 30 minutes in a stirring state of the lifting plate;
step 9, raising the temperature of the kiln body to 100°C, and introducing the argon at the same time with controlling a flow volume at 70 ml/min, and continuously introducing the argon for 30 minutes after the temperature is stable;
step 10, stopping the argon, closing the exhaust hole on the kiln door, and turning on the mechanical pump and the diffusion pump of the rotary kiln to vacuumize the kiln body;
step 11, when the vacuum degree in the kiln body reaches 10⁻⁴ Pa, turning off the mechanical pump and the diffusion pump, opening the pressure limiting valve on the kiln body, setting the pressure of the pressure limiting valve as 1~2 atm, starting to slowly introduce the hydrogen-argon mixed gas (at a volume ratio of the hydrogen to the argon of 20:80), raising the temperature of the kiln body to 300°C at the same time, continuously introducing the hydrogen-argon mixed gas with controlling the flow volume of the gas at 40 ml/min after the temperature is stable, and performing treatment for 60 minutes at a constant temperature and a constant pressure;
step 12, shutting down a heater of the kiln body, stopping the hydrogen-argon mixed gas, closing the pressure limiting valve, and introducing the argon again for protection when the temperature in the kiln descends to 30±5°C; and
step 13, turning on the kiln body tilting switch, starting the jacking cylinder to drive the kiln body to tilt, pouring the treated oily sludge powder into a sealed stainless steel tank, and completing treatment procedures of the Nd-Fe-B oily sludge waste such as oil removal and impurity removal, so as to achieve efficient purification of the Nd-Fe-B oily sludge waste. FIG. 13 shows an appearance of the efficiently purified Nd-Fe-B oily sludge waste.

### Embodiment 2

An efficient purification method of an Nd-Fe-B oily sludge waste includes:
step 1, being the same as the step 1 in the embodiment 1;
step 2, weighing 5 kilograms of the dried oily sludge material, pouring it into the mixing barrel and the mixing basket, weighing 60 percent of ethanol, 35 percent of butanone, and 5 percent of an aqueous ammonia solution with a mass percentage of 1 (all the solutions based on volume percentage, unless otherwise noted) as a diluent with a total volume being 12 litres, and sequentially adding it to the oily sludge material in the mixing basket;
step 3, setting a rate of the stirrer in the mixing barrel as 50 rpm/min and a stirring time as 60 minutes, slowly adding the diluent, starting the stirrer at the same time, and performing stirring while adding the diluent to make the oily sludge material be uniformly mixed under liquid conditions;
step 4, measuring a viscosity of the oily sludge slurry by a paint viscometer #4 as 95 seconds after uniform mixing of the oily sludge material;
step 5, shutting down the stirrer, separating the mixing basket from the mixing barrel, fixing the mixing basket to the disc below the driving motor, descending the mixing barrel by 10 centimeters to make the mixing basket be about 10 centimeters from a liquid level in the mixing barrel, setting that a centrifuging rate of the mixing basket is 230 rpm/min and a centrifuging time is 3 minutes, and throwing clean the residual slurry on the mixing basket; filter residues at a bottom of the mixing basket are impurities in the oily sludge slurry;
step 6, leaving the uniform oily sludge slurry filtered in the mixing barrel for still standing for 2 hours, pouring out upper clear liquid, charging the bottom oily sludge material into the kiln body of the vacuum atmosphere rotary kiln, flushing the oily sludge material in the mixing barrel clean by using the clear liquid for many times, and pouring a flushing fluid into the kiln body together (herein treatment on the clear liquid can be poured into the kiln body according to contents of rare earth and Fe in the clear liquid, or recovered and then reused as a diluent for reutilization); it is suitable that a volume of the oily sludge material and the clear liquid is less than 1/2 of a volume in the kiln body;
step 7, closing the kiln door, opening the exhaust hole formed in the kiln door, and setting that a temperature of the kiln body is 60°C and a baking time is 2 hours;
step 8, turning on a rotary switch of the kiln body, starting the driving device to drive the kiln body to rotate, and continuously baking for 60 minutes in a stirring state of the lifting plate;
step 9, raising the temperature of the kiln body to 200°C, and introducing the argon at the same time with controlling a flow volume at 90 ml/min, and continuously introducing the argon for 60 minutes after the temperature is stable;
step 10, being the same as the step 10 in the embodiment 1;
step 11, when the vacuum degree in the kiln body reaches 10⁻⁴ Pa, turning off the mechanical pump and the diffusion pump, opening the pressure limiting valve on the kiln body, setting the pressure of the pressure limiting valve as 1~2 atm, starting to slowly introduce the hydrogen-argon mixed gas (at a volume ratio of the hydrogen to the argon of 30:70), raising the temperature to 380°C at the same time, continuously introducing the hydrogen-argon mixed gas with controlling the flow volume of the gas at 50 ml/min after the temperature is stable, and performing treatment for 60 minutes at a constant temperature and a constant pressure; and
steps 12-13, being the same as the steps 12-13 in the embodiment 1.

### Embodiment 3

An efficient purification method of an Nd-Fe-B oily sludge waste includes:
step 1, being the same as the step 1 in the embodiment 1;
step 2, weighing 5 kilograms of the dried oily sludge material, pouring it into the mixing barrel and the mixing basket, weighing 95 percent of ethanol and 5 percent of gasoline (both the solutions based on volume percentage, unless otherwise noted) as a diluent with a total volume being 10 litres, and sequentially adding it to the oily sludge material in the mixing basket;
step 3, setting a rate of the stirrer in the mixing barrel as 80 rpm/min and a stirring time as 60 minutes, slowly adding the diluent, starting the stirrer at the same time, and performing stirring while adding the diluent to make the oily sludge material be uniformly mixed under liquid conditions;
step 4, measuring a viscosity of the oily sludge slurry by a paint viscometer #4 as 100 seconds after uniform mixing of the oily sludge material;
step 5, shutting down the stirrer, separating the mixing basket from the mixing barrel, fixing the mixing basket to the disc below the driving motor, descending the mixing barrel by 10 centimeters to make the mixing basket be about 10 centimeters from a liquid level in the mixing barrel, setting that a centrifuging rate of the mixing basket is 280 rpm/min and a centrifuging time is 5 minutes, and throwing clean the residual slurry on the mixing basket; filter residues at a bottom of the mixing basket are impurities in the oily sludge slurry;
step 6, leaving the uniform oily sludge slurry filtered in the mixing barrel for still standing for 3 hours, pouring out upper clear liquid, charging the bottom oily sludge material into the kiln body of the vacuum atmosphere rotary kiln, flushing the oily sludge material in the mixing barrel clean by using the clear liquid for many times, and pouring a flushing fluid into the kiln body together (herein treatment on the clear liquid can be poured into the kiln body according to contents of rare earth and Fe in the clear liquid, or recovered and then reused as a diluent for reutilization); it is suitable that a volume of the oily sludge material and the clear liquid is less than 1/2 of a volume in the kiln body;
step 7, closing the kiln door, opening the exhaust hole formed in the kiln door, and setting that a temperature of the kiln body is 40°C and a baking time is 3 hours;
step 8, turning on a rotary switch of the kiln body, starting the driving device to drive the kiln body to rotate, and continuously baking for 90 minutes in a stirring state of the lifting plate;
step 9, raising the temperature of the kiln body to 150°C, and introducing the argon at the same time with controlling a flow volume at 110 ml/min, and continuously introducing the argon for 120 minutes after the temperature is stable;
step 10, being the same as the step 10 in the embodiment 1;
step 11, when the vacuum degree in the kiln body reaches 10⁻⁴ Pa, turning off the mechanical pump and the diffusion pump, opening the pressure limiting valve on the kiln body, setting the pressure of the pressure limiting valve as 1~2 atm, starting to slowly introduce the hydrogen-argon mixed gas (at a volume ratio of the hydrogen to the argon of 40:60), raising the temperature to 300°C at the same time, continuously introducing the hydrogen-argon mixed gas with controlling the flow volume of the gas at 50 ml/min after the temperature is stable, and performing treatment for 60 minutes at a constant temperature and a constant pressure; and
steps 12~13, being the same as the steps 12~13 in the embodiment 1.

### Embodiment 4

An efficient purification method of an Nd-Fe-B oily sludge waste includes:
step 1, being the same as the step 1 in the embodiment 1;
step 2, weighing 5 kilograms of the dried oily sludge material, pouring it into the mixing barrel and the mixing basket, weighing 60 percent of ethanol, 20 percent of ethyl acetate, and 20 percent of an aqueous ammonia solution with a mass percentage of 1 (all the solutions based on volume percentage, unless otherwise noted) as a diluent with a total volume being 12 litres, and sequentially adding it to the oily sludge material in the mixing basket;
step 3, being the same as the step 3 in the embodiment 3;
step 4, measuring a viscosity of the oily sludge slurry by a paint viscometer #4 as 95 seconds after uniform mixing of the oily sludge material;
step 5, shutting down the stirrer, separating the mixing basket from the mixing barrel, fixing the mixing basket to the disc below the driving motor, descending the mixing barrel by 10 centimeters to make the mixing basket be about 10 centimeters from a liquid level in the mixing barrel, setting that a centrifuging rate of the mixing basket is 230 rpm/min and a centrifuging time is 5 minutes, and throwing clean the residual slurry on the mixing basket; filter residues at a bottom of the mixing basket are impurities in the oily sludge slurry;
steps 6- 8, being the same as the steps 6- 8 in the embodiment 2;
step 9, raising the temperature of the kiln body to 200°C, and introducing the argon at the same time with controlling a flow volume at 100 ml/min, and continuously introducing the argon for 60 minutes after the temperature is stable;
step 10, being the same as the step 10 in the embodiment 1;
step 11, when the vacuum degree in the kiln body reaches 10⁻⁴ Pa, turning off the mechanical pump and the diffusion pump, opening the pressure limiting valve on the kiln body, setting the pressure of the pressure limiting valve as 1~2 atm, starting to slowly introduce the hydrogen-argon mixed gas, raising the temperature to 400°C at the same time, continuously introducing the hydrogen-argon mixed gas (at a volume ratio of the hydrogen to the argon of 50:50) with controlling the flow volume of the gas at 60 ml/min after the temperature is stable, and performing treatment for 60 minutes at a constant temperature and a constant pressure; and
steps 12~13, being the same as the steps 12~13 in the embodiment 1.

Analysis on oxygen and nitrogen contents, carbon and sulfur contents, and components of the treated oily sludge powder are shown in Table 2.

### Embodiment 5

An efficient purification method of an Nd-Fe-B oily sludge waste includes:
step 1, being the same as the step 1 in the embodiment 1;
step 2, weighing 5 kilograms of the dried oily sludge material, pouring it into the mixing barrel and the mixing basket, weighing 80 percent of ethanol and 20 percent of ethyl acetate solution (both the solutions based on volume percentage, unless otherwise noted) as a diluent with a total volume being 10 litres, and sequentially adding it to the oily sludge material in the mixing basket;
step 3, setting a rate of the stirrer in the mixing barrel as 100 rpm/min and a stirring time as 60 minutes, slowly adding the diluent, starting the stirrer at the same time, and performing stirring while adding the diluent to make the oily sludge material be uniformly mixed under liquid conditions;
step 4, being the same as the step 4 in the embodiment 3;
step 5, shutting down the stirrer, separating the mixing basket from the mixing barrel, fixing the mixing basket to the disc below the driving motor, descending the mixing barrel by 10 centimeters to make the mixing basket be about 10 centimeters from a liquid level in the mixing barrel, setting that a centrifuging rate of the mixing basket is 230 rpm/min and a centrifuging time is 8 minutes, and throwing clean the residual slurry on the mixing basket; filter residues at a bottom of the mixing basket are impurities in the oily sludge slurry;
step 6, being the same as the step 6 in the embodiment 3;
steps 7- 8, being the same as the steps 7- 8 in the embodiment 2;
step 9, raising the temperature of the kiln body to 300°C, and introducing the argon at the same time with controlling a flow volume at 90 ml/min, and continuously introducing the argon for 60 minutes after the temperature is stable;
step 10, being the same as the step 10 in the embodiment 1;
step 11, when the vacuum degree in the kiln body reaches 10⁻⁴ Pa, turning off the mechanical pump and the diffusion pump, opening the pressure limiting valve on the kiln body, setting the pressure of the pressure limiting valve as 1~2 atm, starting to slowly introduce the hydrogen-argon mixed gas (at a volume ratio of the hydrogen to the argon of 20:80), raising the temperature to 500°C at the same time, continuously introducing the hydrogen-argon mixed gas with controlling the flow volume of the gas at 70 ml/min after the temperature is stable, and performing treatment for 60 minutes at a constant temperature and a constant pressure; and
steps 12, being the same as the steps 12-13 in the embodiment 1.

### Embodiment 6

An efficient purification method of an Nd-Fe-B oily sludge waste includes:
step 1, being the same as the step 1 in the embodiment 1;
step 2, weighing 5 kilograms of the dried oily sludge material, pouring it into the mixing barrel and the mixing basket, weighing 90 percent of ethanol and 10 percent of petroleum ether (both the solutions based on volume percentage, unless otherwise noted) as a diluent with a total volume being 5 litres, and sequentially adding it to the oily sludge material in the mixing basket;
step 3, setting a rate of the stirrer in the mixing barrel as 100 rpm/min and a stirring time as 120 minutes, slowly adding the diluent, starting the stirrer at the same time, and performing stirring while adding the diluent to make the oily sludge material be uniformly mixed under liquid conditions;
step 4, measuring a viscosity of the oily sludge slurry by a paint viscometer #4 as 120 seconds after uniform mixing of the oily sludge material;
step 5, shutting down the stirrer, separating the mixing basket from the mixing barrel, fixing the mixing basket to the disc below the driving motor, descending the mixing barrel by 10 centimeters to make the mixing basket be about 10 centimeters from a liquid level in the mixing barrel, setting that a centrifuging rate of the mixing basket is 380 rpm/min and a centrifuging time is 8 minutes, and throwing clean the residual slurry on the mixing basket; filter residues at a bottom of the mixing basket are impurities in the oily sludge slurry;
step 6, being the same as the step 6 in the embodiment 3;
step 7, closing the kiln door, opening the exhaust hole formed in the kiln door, and setting that a temperature of the kiln body is 50°C and a baking time is hours;
step 8, turning on a rotary switch of the kiln body, starting the driving device to drive the kiln body to rotate, and continuously baking for 90 minutes in a stirring state of the lifting plate;
step 9, being the same as the step 9 in the embodiment 3;
step 10, being the same as the step 10 in the embodiment 1;
step 11, when the vacuum degree in the kiln body reaches 10⁻⁴ Pa, turning off the mechanical pump and the diffusion pump, opening the pressure limiting valve on the kiln body, setting the pressure of the pressure limiting valve as 1~2 atm, starting to slowly introduce the hydrogen-argon mixed gas, raising the temperature to 320°C at the same time, continuously introducing the hydrogen-argon mixed gas with controlling the flow volume of the gas at 70 ml/min after the temperature is stable, and performing treatment for 120 minutes at a constant temperature and a constant pressure; and
steps 12~13, being the same as the steps 12~13 in the embodiment 1.

### Embodiment 7

An efficient purification method of an Nd-Fe-B oily sludge waste includes:
step 1, being the same as the step 1 in the embodiment 1;
step 2, weighing 5 kilograms of the dried oily sludge material, pouring it into the mixing barrel and the mixing basket, weighing 70 percent of ethylene glycol and 30 percent of ethyl acetate solution (both the solutions based on volume percentage, unless otherwise noted) as a diluent with a total volume being 15 litres, and sequentially adding it to the oily sludge material in the mixing basket;
step 3, setting a rate of the stirrer in the mixing barrel as 80 rpm/min and a stirring time as 100 minutes, slowly adding the diluent, starting the stirrer at the same time, and performing stirring while adding the diluent to make the oily sludge material be uniformly mixed under liquid conditions;
step 4, being the same as the step 4 in the embodiment 3;
step 5, being the same as the step 5 in the embodiment 5;
step 6, being the same as the step 6 in the embodiment 3;
steps 7- 8, being the same as the steps 7- 8 in the embodiment 2;
step 9, being the same as the step 9 in the embodiment 5;
step 10, being the same as the step 10 in the embodiment 1;
step 11, when the vacuum degree in the kiln body reaches 10⁻⁴ Pa, turning off the mechanical pump and the diffusion pump, opening the pressure limiting valve on the kiln body, setting the pressure of the pressure limiting valve as 1~2 atm, starting to slowly introduce the hydrogen-argon mixed gas (at a volume ratio of the hydrogen to the argon of 50:50), raising the temperature to 480°C at the same time, continuously introducing the hydrogen-argon mixed gas with controlling the flow volume of the gas at 50 ml/min after the temperature is stable, and performing treatment for 60 minutes at a constant temperature and a constant pressure; and
steps 12~13, being the same as the steps 12~13 in the embodiment 1.

### Embodiment 8

An efficient purification method of an Nd-Fe-B oily sludge waste includes:
step 1, being the same as the step 1 in the embodiment 1;
step 2, weighing 5 kilograms of the dried oily sludge material, pouring it into the mixing barrel and the mixing basket, weighing 70 percent of ethanol, 15 percent of ethyl acetate, and 15 percent of aqueous ammonia with a mass percentage of 1 (all the solutions based on volume percentage, unless otherwise noted) as a diluent with a total volume being 10 litres, and sequentially adding it to the oily sludge material in the mixing basket;
step 3, being the same as the step 3 in the embodiment 7;
step 4, being the same as the step 4 in the embodiment 3;
steps 5- 6, being the same as the steps 5- 6 in the embodiment 5;
steps 7- 8, being the same as the steps 7- 8 in the embodiment 4;
step 9, raising the temperature of the kiln body to 280°C, and introducing the argon at the same time with controlling a flow volume at 110 ml/min, and continuously introducing the argon for 60 minutes after the temperature is stable;
step 10, being the same as the step 10 in the embodiment 1;
step 11, being the same as the step 11 in the embodiment 7;
steps 12~13, being the same as the steps 12~13 in the embodiment 1.

### Embodiment 9

An efficient purification method of an Nd-Fe-B oily sludge waste includes:
step 1, being the same as the step 1 in the embodiment 1;
step 2, weighing 5 kilograms of the dried oily sludge material, pouring it into the mixing barrel and the mixing basket, weighing 80 percent of ethylene glycol, 15 percent of butanone, and 5 percent of petroleum ether (all the solutions based on volume percentage, unless otherwise noted) as a diluent with a total volume being 8 litres, and sequentially adding it to the oily sludge material in the mixing basket;
step 3, setting a rate of the stirrer in the mixing barrel as 90 rpm/min and a stirring time as 100 minutes, slowly adding the diluent, starting the stirrer at the same time, and performing stirring while adding the diluent to make the oily sludge material be uniformly mixed under liquid conditions;
step 4, measuring a viscosity of the oily sludge slurry by a paint viscometer #4 as 110 seconds after uniform mixing of the oily sludge material;
step 5, shutting down the stirrer, separating the mixing basket from the mixing barrel, fixing the mixing basket to the disc below the driving motor, descending the mixing barrel by 10 centimeters to make the mixing basket be about 10 centimeters from a liquid level in the mixing barrel, setting that a centrifuging rate of the mixing basket is 250 rpm/min and a centrifuging time is 8 minutes, and throwing clean the residual slurry on the mixing basket; filter residues at a bottom of the mixing basket are impurities in the oily sludge slurry;
step 6, being the same as the step 6 in the embodiment 3;
step 7, closing the kiln door, opening the exhaust hole formed in the kiln door, and setting that a temperature of the kiln body is 50°C and a baking time is 3 hours;
steps 8~9, being the same as the steps 8~9 in the embodiment 3;
step 10, being the same as the step 10 in the embodiment 1;
step 11, being the same as the step 11 in the embodiment 6;
steps 12~13, being the same as the steps 12~13 in the embodiment 1.

### Embodiment 10

An efficient purification method of an Nd-Fe-B oily sludge waste includes:
step 1, being the same as the step 1 in the embodiment 1;
step 2, weighing 5 kilograms of the dried oily sludge material, pouring it into the mixing barrel and the mixing basket, weighing 85 percent of ethylene glycol, 5 percent of gasoline, and 10 percent of aqueous ammonia with a mass percentage of 1 (all the solutions based on volume percentage, unless otherwise noted) as a diluent with a total volume being 8 litres, and sequentially adding it to the oily sludge material in the mixing basket;
step 3, being the same as the step 3 in the embodiment 9;
step 4, being the same as the step 4 in the embodiment 3;
step 5, being the same as the step 5 in the embodiment 9;
step 6, being the same as the step 6 in the embodiment 3;
step 7, closing the kiln door, opening the exhaust hole formed in the kiln door, and setting that a temperature of the kiln body is 40°C and a baking time is 4 hours;
steps 8~9, being the same as the steps 8~9 in the embodiment 3;
step 10, being the same as the step 10 in the embodiment 1;
step 11, being the same as the step 11 in the embodiment 6;
steps 12~13, being the same as the steps 12~13 in the embodiment 1.

### Embodiment 11

An efficient purification method of an Nd-Fe-B oily sludge waste includes:
step 1, being the same as the step 1 in the embodiment 1;
step 2, weighing 5 kilograms of the dried oily sludge material, pouring it into the mixing barrel and the mixing basket, weighing 90 percent of ethylene glycol and 10 percent of aqueous ammonia with a mass percentage of 1 (both the solutions based on volume percentage, unless otherwise noted) as a diluent with a total volume being 10 litres, and sequentially adding it to the oily sludge material in the mixing basket;
step 3, being the same as the step 3 in the embodiment 7;
step 4, being the same as the step 4 in the embodiment 3;
step 5, being the same as the step 5 in the embodiment 9;
step 6, being the same as the step 6 in the embodiment 3;
step 7, closing the kiln door, opening the exhaust hole formed in the kiln door, and setting that a temperature of the kiln body is 50°C and a baking time is 2 hours;
step 8, being the same as the step 8 in the embodiment 2;
step 9, raising the temperature of the kiln body to 280°C, and introducing the argon at the same time with controlling a flow volume at 100 ml/min, and continuously introducing the argon for 60 minutes after the temperature is stable;
step 10, being the same as the step 10 in the embodiment 1;
step 11, when the vacuum degree in the kiln body reaches 10⁻⁴ Pa, turning off the mechanical pump and the diffusion pump, opening the pressure limiting valve on the kiln body, setting the pressure of the pressure limiting valve as 1~2 atm, starting to slowly introduce the hydrogen-argon mixed gas (at a volume ratio of the hydrogen to the argon of 50:50), raising the temperature to 450°C at the same time, continuously introducing the hydrogen-argon mixed gas with controlling the flow volume of the gas at 60 ml/min after the temperature is stable, and performing treatment for 60 minutes at a constant temperature and a constant pressure; and
steps 12~13, being the same as the steps 12~13 in the embodiment 1.

### Embodiment 12

An efficient purification method of an Nd-Fe-B oily sludge waste includes:
step 1, being the same as the step 1 in the embodiment 1;
step 2, weighing 5 kilograms of the dried oily sludge material, pouring it into the mixing barrel and the mixing basket, weighing 75 percent of isopropanol, 10 percent of gasoline, and 15 percent of aqueous ammonia (all the solutions based on volume percentage, unless otherwise noted) as a diluent with a total volume being 5 litres, and sequentially adding it to the oily sludge material in the mixing basket;
step 3, being the same as the step 3 in the embodiment 6;
step 4, being the same as the step 4 in the embodiment 6;
step 5, shutting down the stirrer, separating the mixing basket from the mixing barrel, fixing the mixing basket to the disc below the driving motor, descending the mixing barrel by 10 centimeters to make the mixing basket be about 10 centimeters from a liquid level in the mixing barrel, setting that a centrifuging rate of the mixing basket is 350 rpm/min and a centrifuging time is 10 minutes, and throwing clean the residual slurry on the mixing basket; filter residues at a bottom of the mixing basket are impurities in the oily sludge slurry;
step 6, being the same as the step 6 in the embodiment 3;
step 7, closing the kiln door, opening the exhaust hole formed in the kiln door, and setting that a temperature of the kiln body is 40°C and a baking time is 5 hours;
step 8, being the same as the step 8 in the embodiment 3;
step 9, raising the temperature of the kiln body to 150°C, and introducing the argon at the same time with controlling a flow volume at 100 ml/min, and continuously introducing the argon for 60 minutes after the temperature is stable;
step 10, being the same as the step 10 in the embodiment 1;
step 11, when the vacuum degree in the kiln body reaches 10⁻⁴ Pa, turning off the mechanical pump and the diffusion pump, opening the pressure limiting valve on the kiln body, setting the pressure of the pressure limiting valve as 1~2 atm, starting to slowly introduce the hydrogen-argon mixed gas (at a volume ratio of the hydrogen to the argon of 50:50), raising the temperature to 450°C at the same time, continuously introducing the hydrogen-argon mixed gas after the temperature is stable, and performing treatment for 120 minutes at a constant temperature and a constant pressure; and
steps 12-13, being the same as the steps 12-13 in the embodiment 1.

### Embodiment 13

An efficient purification method of an Nd-Fe-B oily sludge waste includes:
step 1, being the same as the step 1 in the embodiment 1;
step 2, weighing 5 kilograms of the dried oily sludge material, pouring it into the mixing barrel and the mixing basket, weighing 80 percent of isopropanol, 10 percent of ethyl acetate, and 10 percent of aqueous ammonia with a mass percentage of 1 (all the solutions based on volume percentage, unless otherwise noted) as a diluent with a total volume being 12 litres, and sequentially adding it to the oily sludge material in the mixing basket;
step 3, being the same as the step 3 in the embodiment 3;
step 4, being the same as the step 4 in the embodiment 2;
step 5, being the same as the step 5 in the embodiment 4;
steps 6- 8, being the same as the steps 6- 8 in the embodiment 2;
step 9, raising the temperature of the kiln body to 250°C, and introducing the argon at the same time with controlling a flow volume at 110 ml/min, and continuously introducing the argon for 120 minutes after the temperature is stable;
step 10, being the same as the step 10 in the embodiment 1;
step 11, when the vacuum degree in the kiln body reaches 10⁻⁴ Pa, turning off the mechanical pump and the diffusion pump, opening the pressure limiting valve on the kiln body, setting the pressure of the pressure limiting valve as 1~2 atm, starting to slowly introduce the hydrogen-argon mixed gas (at a volume ratio of the hydrogen to the argon of 50:50), raising the temperature to 320°C at the same time, continuously introducing the hydrogen-argon mixed gas after the temperature is stable, and performing treatment for 60 minutes at a constant temperature and a constant pressure; and steps 12-13, being the same as the steps 12-13 in the embodiment 1.

### Embodiment 14

An efficient purification method of an Nd-Fe-B oily sludge waste includes:
step 1, being the same as the step 1 in the embodiment 1;
step 2, weighing 5 kilograms of the dried oily sludge material, pouring it into the mixing barrel and the mixing basket, weighing 85 percent of isopropanol and 15 percent of butanone (both the solutions based on volume percentage, unless otherwise noted) as a diluent with a total volume being 10 litres, and sequentially adding it to the oily sludge material in the mixing basket;
steps 3- 4, being the same as the steps 3- 4 in the embodiment 3;
step 5, being the same as the step 5 in the embodiment 5;
steps 6- 8, being the same as the steps 6- 8 in the embodiment 2;
step 9, raising the temperature of the kiln body to 250°C, and introducing the argon at the same time with controlling a flow volume at 100 ml/min, and continuously introducing the argon for 60 minutes after the temperature is stable;
step 10, being the same as the step 10 in the embodiment 1;
step 11, being the same as the step 11 in the embodiment 11;
steps 12-13, being the same as the steps 12-13 in the embodiment 1.

### Embodiment 15

An efficient purification method of an Nd-Fe-B oily sludge waste includes:
step 1, being the same as the step 1 in the embodiment 1;
step 2, weighing 5 kilograms of the dried oily sludge material, pouring it into the mixing barrel and the mixing basket, weighing 90 percent of isopropanol and 10 percent of butanone (both the solutions based on volume percentage, unless otherwise noted) as a diluent with a total volume being 12 litres, and sequentially adding it to the oily sludge material in the mixing basket;
step 3, being the same as the step 3 in the embodiment 3;
step 4, being the same as the step 4 in the embodiment 2;
step 5, being the same as the step 5 in the embodiment 4;
step 6, being the same as the step 6 in the embodiment 2;
steps 7- 8, being the same as the steps 7- 8 in the embodiment 2;
step 9, raising the temperature of the kiln body to 250°C, and introducing the argon at the same time with controlling a flow volume at 90 ml/min, and continuously introducing the argon for 60 minutes after the temperature is stable;
step 10, being the same as the step 10 in the embodiment 1;
step 11, being the same as the step 11 in the embodiment 2;
steps 12-13, being the same as the steps 12-13 in the embodiment 1.

### Embodiment 16

An efficient purification method of an Nd-Fe-B oily sludge waste includes:
step 1, being the same as the step 1 in the embodiment 1;
step 2, weighing 5 kilograms of the dried oily sludge material, pouring it into the mixing barrel and the mixing basket, weighing 90 percent of isopropanol, 5 percent of petroleum ether, and 5 percent of aqueous ammonia with a mass percentage of 1 (all the solutions based on volume percentage, unless otherwise noted) as a diluent with a total volume being 10 litres, and sequentially adding it to the oily sludge material in the mixing basket;
step 3, setting a rate of the stirrer in the mixing barrel as 90 rpm/min and a stirring time as 60 minutes, slowly adding the diluent, starting the stirrer at the same time, and performing stirring while adding the diluent to make the oily sludge material be uniformly mixed under liquid conditions;
step 4, being the same as the step 4 in the embodiment 9;
step 5, shutting down the stirrer, separating the mixing basket from the mixing barrel, fixing the mixing basket to the disc below the driving motor, descending the mixing barrel by 10 centimeters to make the mixing basket be about 10 centimeters from a liquid level in the mixing barrel, setting that a centrifuging rate of the mixing basket is 230 rpm/min and a centrifuging time is 6 minutes, and throwing clean the residual slurry on the mixing basket; filter residues at a bottom of the mixing basket are impurities in the oily sludge slurry;
step 6, being the same as the step 6 in the embodiment 2;
step 7, being the same as the step 7 in the embodiment 9;
steps 8~9, being the same as the steps 8~9 in the embodiment 3;
step 10, being the same as the step 10 in the embodiment 1;
step 11, when the vacuum degree in the kiln body reaches 10⁻⁴ Pa, turning off the mechanical pump and the diffusion pump, opening the pressure limiting valve on the kiln body, setting the pressure of the pressure limiting valve as 1~2 atm, starting to slowly introduce the hydrogen-argon mixed gas (at a volume ratio of the hydrogen to the argon of 50:50), raising the temperature to 380°C at the same time, continuously introducing the hydrogen-argon mixed gas with controlling the flow volume of the gas at 50 ml/min after the temperature is stable, and performing treatment for 120 minutes at a constant temperature and a constant pressure; and
steps 12-13, being the same as the steps 12-13 in the embodiment 1.

### Embodiment 17

An efficient purification method of an Nd-Fe-B oily sludge waste includes:
step 1, being the same as the step 1 in the embodiment 1;
step 2, weighing 5 kilograms of the dried oily sludge material, pouring it into the mixing barrel and the mixing basket, weighing 95 percent of isopropanol and 5 percent of ethyl acetate (both the solutions based on volume percentage, unless otherwise noted) as a diluent with a total volume being 12 litres, and sequentially adding it to the oily sludge material in the mixing basket;
step 3, being the same as the step 3 in the embodiment 3;
step 4, being the same as the step 4 in the embodiment 2;
step 5, shutting down the stirrer, separating the mixing basket from the mixing barrel, fixing the mixing basket to the disc below the driving motor, descending the mixing barrel by 10 centimeters to make the mixing basket be about 10 centimeters from a liquid level in the mixing barrel, setting that a centrifuging rate of the mixing basket is 280 rpm/min and a centrifuging time is 6 minutes, and throwing clean the residual slurry on the mixing basket; filter residues at a bottom of the mixing basket are impurities in the oily sludge slurry;
step 6, being the same as the step 6 in the embodiment 2;
step 7, closing the kiln door, opening the exhaust hole formed in the kiln door, and setting that a temperature of the kiln body is 60°C and a baking time is 3 hours;
step 8, being the same as the step 8 in the embodiment 2;
step 9, being the same as the step 9 in the embodiment 15;
step 10, being the same as the step 10 in the embodiment 1;
step 11, being the same as the step 11 in the embodiment 13;
steps 12-13, being the same as the steps 12-13 in the embodiment 1.

### Embodiment 18

An efficient purification method of an Nd-Fe-B oily sludge waste includes:
step 1, being the same as the step 1 in the embodiment 1;
step 2, weighing 5 kilograms of the dried oily sludge material, pouring it into the mixing barrel and the mixing basket, weighing 60 percent of isopropanol and 40 percent of aqueous ammonia with a mass percentage of 1 (both the solutions based on volume percentage, unless otherwise noted) as a diluent with a total volume being 10 litres, and sequentially adding it to the oily sludge material in the mixing basket;
step 3, setting a rate of the stirrer in the mixing barrel as 80 rpm/min and a stirring time as 80 minutes, slowly adding the diluent, starting the stirrer at the same time, and performing stirring while adding the diluent to make the oily sludge material be uniformly mixed under liquid conditions;
step 4, being the same as the step 4 in the embodiment 3;
step 5, shutting down the stirrer, separating the mixing basket from the mixing barrel, fixing the mixing basket to the disc below the driving motor, descending the mixing barrel by 10 centimeters to make the mixing basket be about 10 centimeters from a liquid level in the mixing barrel, setting that a centrifuging rate of the mixing basket is 260 rpm/min and a centrifuging time is 6 minutes, and throwing clean the residual slurry on the mixing basket; filter residues at a bottom of the mixing basket are impurities in the oily sludge slurry;
step 6, being the same as the step 6 in the embodiment 3;
steps 7- 8, being the same as the steps 7- 8 in the embodiment 2;
step 9, raising the temperature of the kiln body to 250°C, and introducing the argon at the same time with controlling a flow volume at 110 ml/min, and continuously introducing the argon for 60 minutes after the temperature is stable;
step 10, being the same as the step 10 in the embodiment 1;
step 11, being the same as the step 11 in the embodiment 2;
steps 12-13, being the same as the steps 12-13 in the embodiment 1.

### Embodiment 19

An efficient purification method of an Nd-Fe-B oily sludge waste includes:
step 1, being the same as the step 1 in the embodiment 1;
step 2, weighing 5 kilograms of the dried oily sludge material, pouring it into the mixing barrel and the mixing basket, weighing 80 percent of ethyl acetate and 20 percent of aqueous ammonia with a mass percentage of 1 (both the solutions based on volume percentage, unless otherwise noted) as a diluent with a total volume being 14 litres, and sequentially adding it to the oily sludge material in the mixing basket;
step 3, setting a rate of the stirrer in the mixing barrel as 60 rpm/min and a stirring time as 80 minutes, slowly adding the diluent, starting the stirrer at the same time, and performing stirring while adding the diluent to make the oily sludge material be uniformly mixed under liquid conditions;
step 4, being the same as the step 4 in the embodiment 3;
step 5, shutting down the stirrer, separating the mixing basket from the mixing barrel, fixing the mixing basket to the disc below the driving motor, descending the mixing barrel by 10 centimeters to make the mixing basket be about 10 centimeters from a liquid level in the mixing barrel, setting that a centrifuging rate of the mixing basket is 260 rpm/min and a centrifuging time is 8 minutes, and throwing clean the residual slurry on the mixing basket; filter residues at a bottom of the mixing basket are impurities in the oily sludge slurry;
step 6, being the same as the step 6 in the embodiment 3;
step 7, being the same as the step 7 in the embodiment 6;
step 8, being the same as the step 8 in the embodiment 2;
step 9, raising the temperature of the kiln body to 270°C, and introducing the argon at the same time with controlling a flow volume at 100 ml/min, and continuously introducing the argon for 80 minutes after the temperature is stable;
step 10, being the same as the step 10 in the embodiment 1;
step 11, when the vacuum degree in the kiln body reaches 10⁻⁴ Pa, turning off the mechanical pump and the diffusion pump, opening the pressure limiting valve on the kiln body, setting the pressure of the pressure limiting valve as 1~2 atm, starting to slowly introduce the hydrogen-argon mixed gas (at a volume ratio of the hydrogen to the argon of 50:50), raising the temperature to 420°C at the same time, continuously introducing the hydrogen-argon mixed gas after the temperature is stable, and performing treatment for 60 minutes at a constant temperature and a constant pressure; and
steps 12-13, being the same as the steps 12-13 in the embodiment 1.

### Embodiment 20

An efficient purification method of an Nd-Fe-B oily sludge waste includes:
step 1, being the same as the step 1 in the embodiment 1;
step 2, weighing 5 kilograms of the dried oily sludge material, pouring it into the mixing barrel and the mixing basket, weighing 60 percent of isopropanol, 10 percent of petroleum ether, and 30 percent of aqueous ammonia with a mass percentage of 1 (all the solutions based on volume percentage, unless otherwise noted) as a diluent with a total volume being 10 litres, and sequentially adding it to the oily sludge material in the mixing basket;
steps 3- 4, being the same as the steps 3- 4 in the embodiment 6;
step 5, being the same as the step 5 in the embodiment 12;
step 6, being the same as the step 6 in the embodiment 3;
step 7, closing the kiln door, opening the exhaust hole formed in the kiln door, and setting that a temperature of the kiln body is 50°C and a baking time is 5 hours;
steps 8~9, being the same as the steps 8~9 in the embodiment 3;
step 10, being the same as the step 10 in the embodiment 1;
step 11, being the same as the step 11 in the embodiment 6;
steps 12-13, being the same as the steps 12-13 in the embodiment 1.

### Comparative example 1

A treatment method of an Nd-Fe-B oily sludge waste includes:
adding anhydrous ethanol in the Nd-Fe-B oily sludge waste at a volume ratio of 1:10, and performing vacuum distillation at 100°C; then, adding 3 percent by mass of dilute nitric acid to distilled powder, and cleaning and magnetically separating a mixture in an ultrasonic environment for repeated treatment for 10 times; and ultrasonically cleaning an obtained product by adding the anhydrous ethanol for 5 times, ultrasonically cleaning it with acetone for 5 times, and performing drying to obtain the treated oily sludge powder.

### Comparative example 2

A treatment method of an Nd-Fe-B oily sludge waste includes:
adding excessive 2 mol/L hydrochloric acid solution to the Nd-Fe-B oily sludge waste, heating a resultant in a water bath at 80°C with thermal insulation for 30 minutes; filtering a resultant, adding the aqueous ammonia (with a pH value being 2) and oxalic acid to the oily sludge material again, and heating a resultant in a water bath at 70°C with thermal insulation for 30 minutes; and performing centrifugation, washing, and precipitation, and charging precipitates into a muffle furnace for roasting at 900°C for 180 minutes to obtain the treated oily sludge powder.

### Comparative example 3

A treatment method of an Nd-Fe-B oily sludge waste includes:
adding an OP emulsifier and an ethanol solution to the Nd-Fe-B oily sludge waste, and charging a mixture into a centrifugal machine for centrifugation for 3 times, 30 minutes each time; and then performing precipitation distillation on mixed liquid for treatment, then adding a hydrochloric acid-ethanol mixed solution with 1 wt% of hydrochloric acid to precipitates for cleaning for 30 minutes with repeatedly cleaning the precipitates for 3 times, and drying a resultant to obtain the treated oily sludge powder.

### Comparative example 4

A treatment method of an Nd-Fe-B oily sludge waste includes:
adding gasoline to the Nd-Fe-B oily sludge waste, charging a mixture into a ball mill jar for ball milling for 5 hours; then adding 15 vol% acetic acid solution; performing ultrasonic treatment in a magnetic field for 20 minutes and magnetic separation; then pouring out liquid; then placing the oily sludge into a centrifuge tube; adding the anhydrous ethanol for centrifugation for 10 minutes; performing repeated operation for 5 times; and finally, placing powder in a vacuum drying oven for drying for 2 hours to obtain the treated oily sludge powder.

### Comparative example 5

A treatment method of an Nd-Fe-B oily sludge waste includes:
adding deionized water to the Nd-Fe-B oily sludge waste for uniform stirring; drying a mixture by distillation in a constant-temperature water bath at 80°C; adding acetone to distilled powder for ultrasonic cleaning for 3 times; then adding the anhydrous ethanol for ultrasonic cleaning to remove washing liquid; and vacuum drying a resultant at 70°C to obtain the treated oily sludge powder.

### Comparative example 6

A treatment method of an Nd-Fe-B oily sludge waste includes:
adding a mixed solution of 0.2g/L sodium hydroxide, 3% OP emulsifier, and ethanol to the Nd-Fe-B oily sludge waste for ultrasonic cleaning for 30 minutes with repeatedly cleaning for 3 times; then adding the ethanol to the oily sludge again for cleaning; magnetically separating the oily sludge at the same time; and vacuum drying a separated object to obtain the treated oily sludge powder.

In the efficient purification method of the Nd-Fe-B oily sludge waste used in each of embodiments 1-20 and the treatment method of the Nd-Fe-B oily sludge waste used in each of comparative examples 1-6, analysis on oxygen, hydrogen, nitrogen, carbon, sulfur, and other components of the treated oily sludge powder is shown in Table 1.

| Embodiment | Oxy gen cont ent/ % | Hyd roge n cont ent/ % | Carbo n conten t/% | Nitr ogen cont ent/ % | Sulf ur cont ent/ % | Nd% | Pr% | Dy % | Ce% | Co % | Gd % | B% | Fe% |
|---|---|---|---|---|---|---|---|---|---|---|---|---|---|
| Nd-Fe-B oily sludge | 17.1 | 3.81 | 13.75 | 0.26 | 0.16 | 17.7 | 3.94 | 0.83 | 3.86 | 0.7 | 0.73 | 1.13 | 68.37 |
| Embodiment 1 | 4.34 | 0.28 | 1.10 | 0.04 | 0.07 | 16.7 | 3.14 | 0.36 | 1.83 | 0.59 | 0.64 | 0.42 | 74.09 |
| Embodiment 2 | 6.25 | 0.17 | 1.27 | 0.02 | 0.06 | 16.2 | 2.76 | 0.53 | 2.82 | 0.66 | 0.72 | 0.32 | 74.73 |
| Embodiment 3 | 5.79 | 0.36 | 1.12 | 0.07 | 0.07 | 14.11 | 2.02 | 0.44 | 2.06 | 0.57 | 0.54 | 0.21 | 77.58 |
| Embodiment 4 | 5.67 | 0.38 | 1.31 | 0.03 | 0.07 | 16.15 | 2.97 | 0.38 | 3.25 | 0.64 | 0.71 | 0.45 | 74.06 |
| Embodiment 5 | 6.78 | 0.08 | 1.13 | 0.03 | 0.08 | 15.08 | 2.19 | 0.58 | 2.83 | 0.66 | 0.45 | 0.38 | 75.25 |
| Embodiment 6 | 6.79 | 0.36 | 1.10 | 0.04 | 0.06 | 14.58 | 2.05 | 0.23 | 2.68 | 0.54 | 0.64 | 0.34 | 76.44 |
| Embodiment 7 | 6.33 | 0.22 | 1.12 | 0.09 | 0.06 | 15.84 | 2.03 | 0.25 | 2.32 | 0.54 | 0.34 | 0.22 | 76.58 |
| Embodiment 8 | 3.5 | 0.35 | 0.92 | 0.03 | 0.04 | 15.28 | 2.23 | 0.23 | 1.02 | 0.57 | 0.44 | 0.11 | 78.21 |
| Embodiment 9 | 5.36 | 0.24 | 1.33 | 0.04 | 0.07 | 15.25 | 2.89 | 0.44 | 1.29 | 0.49 | 0.45 | 0.57 | 76.53 |
| Embodiment 10 | 6.73 | 0.15 | 1.27 | 0.06 | 0.04 | 16.46 | 2.73 | 0.48 | 2.53 | 0.65 | 0.53 | 0.47 | 73.41 |
| Embodiment 11 | 3.59 | 0.29 | 1.05 | 0.09 | 0.06 | 16.19 | 2.55 | 0.36 | 1.36 | 0.49 | 0.69 | 0.1 | 75.77 |
| Embodiment 12 | 5.51 | 0.32 | 1.29 | 0.06 | 0.08 | 17.49 | 3.02 | 0.61 | 2.38 | 0.64 | 0.65 | 0.36 | 73.03 |
| Embodiment 13 | 6.12 | 0.09 | 1.13 | 0.07 | 0.05 | 15.35 | 2.11 | 0.46 | 1.34 | 0.64 | 0.54 | 0.33 | 77.07 |
| Embodiment 14 | 4.28 | 0.17 | 1.38 | 0.04 | 0.08 | 15.19 | 1.59 | 0.52 | 1.56 | 0.68 | 0.42 | 0.1 | 78.25 |
| Embodiment 15 | 5.15 | 0.28 | 0.70 | 0.04 | 0.09 | 14.98 | 2.34 | 0.5 | 1.7 | 0.57 | 0.62 | 0.32 | 77.37 |
| Embodiment 16 | 4.4 | 0.28 | 1.25 | 0.04 | 0.09 | 16.2 | 2.32 | 0.6 | 1.82 | 0.58 | 0.58 | 0.14 | 75.56 |
| Embodiment 17 | 4.72 | 0.22 | 1.10 | 0.07 | 0.06 | 15.42 | 1.47 | 0.33 | 1.27 | 0.47 | 0.55 | 0.11 | 78.22 |
| Embodiment 18 | 5.97 | 0.33 | 1.27 | 0.03 | 0.07 | 13.06 | 1.37 | 0.45 | 1.96 | 0.49 | 0.35 | 0.13 | 79.47 |
| Embodiment 19 | 6.7 | 0.26 | 1.33 | 0.04 | 0.06 | 15.68 | 2.13 | 0.42 | 2.24 | 0.64 | 0.44 | 0.28 | 75.58 |
| Embodiment 20 | 6.61 | 0.36 | 0.89 | 0.04 | 0.09 | 16.36 | 2.19 | 0.46 | 2.5 | 0.64 | 0.52 | 0.6 | 74.48 |
| Comparative Example 1 | 15.8 | 1.51 | 6.06 | 0.13 | 0.08 | 2.06 | 0.37 | 0.48 | 0.53 | 0.59 | 0.05 | 0.08 | 94.38 |
| Comparative Example 2 | 13.6 | 1.88 | 7.85 | 0.12 | 0.06 | 3.98 | 0.39 | 0.26 | 0.68 | 0.27 | 0.09 | 0.06 | 91.42 |
| Comparative Example 3 | 14.8 | 1.96 | 5.79 | 0.18 | 0.09 | 3.58 | 0.99 | 0.27 | 0.80 | 0.24 | 0.14 | 0.03 | 90.33 |
| Comparative Example 4 | 11.8 | 1.11 | 5.21 | 0.05 | 0.07 | 4.35 | 0.92 | 0.38 | 0.66 | 0.22 | 0.11 | 0.01 | 92.32 |
| Comparative Example 5 | 15.0 | 2.55 | 10.21 | 0.22 | 0.10 | 6.23 | 1.45 | 0.46 | 1.84 | 0.44 | 0.12 | 0.12 | 86.42 |
| Comparative Example 6 | 10.9 | 1.51 | 3.17 | 0.03 | 0.06 | 4.12 | 0.92 | 0.46 | 0.66 | 0.24 | 0.12 | 0.06 | 90.55 |

It can be seen from Table 1 that by using the purification methods in the embodiments 1-20, an oil removal rate of the Nd-Fe-B oily sludge waste is 95% or above (C and H contents in the oily sludge), an oxygen content of the sludge is reduced by about 60~80%, and there is almost no loss of rare earth Nd in the treatment process. By using the treatment methods in comparative examples 1-6, on the one hand, it can be seen that there is a large loss of rare earth elements; and on the other hand, there are high C and H contents of the oily sludge, which indicates a poor oil removal effect.

It should be understood that the various forms of processes shown above may be used to reorder, add or delete the steps. For example, various steps recorded in the present application may be executed in parallel or in sequence or in different orders, which will not be limited in the present application as long as the expected results of the technical solution disclosed in the present application can be achieved.

In addition, the terms "first", "second" are used only for description and shall not be interpreted as an indication or implication of relative importance or an implicit indication of the number of technical features. Therefore, the features defined by "first" and "second" may explicitly or implicitly include at least one of the features. In the description of the present application, "a plurality of" means two or more, unless otherwise specifically defined.

The above merely describes specific embodiments of the present application, but the protection scope of the present application is not limited thereto. Any person skilled in the art can easily conceive modifications or replacements within the technical scope of the present application, and these modifications or replacements shall fall within the protection scope of the present application. Therefore, the protection scope of the present application shall be subject to the protection scope of the claims.

## Claims

1. An efficient purification method of an RFeB-based oily sludge waste, wherein R is one or more of rare earth elements, and the method comprises following steps:
placing a pretreated RFeB-based oily sludge waste in a vacuum gas rotary kiln into which inert gas is introduced, for primary purification at 100~300°C; and
introducing purified gas into the vacuum gas rotary kiln when a vacuum degree of the vacuum gas rotary kiln reaches a set threshold, and performing secondary purification on the RFeB-based oily sludge waste subjected to the primary purification at 300~500°C.

2. The method according to claim 1, wherein the primary purification comprises:
raising a temperature of the vacuum gas rotary kiln, and introducing the inert gas into the vacuum gas rotary kiln until the temperature of the vacuum gas rotary kiln is stabilized at 100~300°C; and
continuously introducing the inert gas for 30~120 minutes to perform the primary purification on the pretreated RFeB-based oily sludge waste.

3. The method according to claim 2, wherein a flow volume of the inert gas is 70~110 mL/min.

4. The method according to claim 1, wherein the secondary purification comprises:
vacuumizing the vacuum gas rotary kiln until the vacuum degree in the vacuum gas rotary kiln reaches a set threshold, and setting a pressure of a pressure limiting valve of the vacuum gas rotary kiln as 1~2 atm;
raising a temperature of the vacuum gas rotary kiln, and introducing the purified gas into the vacuum gas rotary kiln until the temperature of the vacuum gas rotary kiln is stabilized at 300~500°C; and
continuously introducing the purified gas for 60~120 minutes to perform the secondary purification on the RFeB-based oily sludge waste subjected to the primary purification.

5. The method according to claim 4, wherein the purified gas is mixed gas of hydrogen and the inert gas, and a volume ratio of the hydrogen to the inert gas is (20:80)~(50:50).

6. The method according to claim 5, wherein a flow volume of the purified gas is 30~70 mL/min.

7. The method according to claim 1, wherein the RFeB-based oily sludge waste comprises at least one of pretreatment methods of drying, activation or pre-purification.

8. The method according to claim 7, wherein the activation comprises:
adding a dried RFeB-based oily sludge waste and a diluent to an oily sludge mixture filtration device for stirring, to make the dried RFeB-based oily sludge waste be in a full contact to the diluent to achieve the activation.

9. The method according to claim 8, wherein based on volume percentage, the diluent comprises at least two of 60~95 percent of an alcohol compound, 5~80 percent of a ketone compound or an ester compound, 5~10 percent of a petroleum derivative, or 5~40 percent of a weakly alkaline solution.

10. The method according to claim 9, wherein the alcohol compound is a lower alcohol compound having no more than three carbon atoms.

11. The method according to claim 10, wherein the petroleum derivative comprises at least one of gasoline or petroleum ether.

12. The method according to claim 11, wherein an amount of the diluent added is 1~3 L/kg based on mass of the dried RFeB-based oily sludge waste.

13. The method according to claim 12, wherein a stirring rate is 30~100 r/min, and a stirring time is 30~120 minutes.

14. The method according to claim 7, wherein the pre-purification comprises: centrifuging and baking the RFeB-based oily sludge waste after the activation to achieve the pre-purification.

15. The method according to claim 14, wherein a baking temperature is 40~50°C, and a baking time is 1 hour~5 hours.

16. The method according to claim 15, wherein the RFeB-based oily sludge waste is continuously baked at 40~50°C for 30-90 minutes in a stirring state.

17. The method according to claim 14, wherein centrifuging conditions comprise: a centrifuging rate is 150~380 r/min, and a centrifuging time is 1 minute~10 minutes.

18. The method according to any one of claims 8 to 13, wherein the oily sludge mixture filtration device comprises:
a crate;
a mixing barrel arranged in the crate; wherein a discharge channel communicating with an interior of the mixing barrel is formed in a lower side of the mixing barrel;
a mixing basket, which is configured to contain the RFeB-based oily sludge waste and to be detachably connected with the crate;
a stirrer, which is arranged in the mixing barrel and configured to stir the RFeB-based oily sludge waste in the mixing barrel;
a driving motor, which is arranged on the crate above the mixing barrel, connected with the stirrer, and configured to drive the stirrer to rotate; and
a vibrating motor, which is arranged below the mixing barrel and configured to make the RFeB-based oily sludge waste in the mixing barrel to flow out through the discharge channel.

19. The method according to claim 18, wherein the oily sludge mixture filtration device further comprises:
a spring; wherein an end of the spring is connected with a bottom of the mixing barrel, another end of the spring is connected with a base, and the base is configured to place the mixing barrel.

20. The method according to claim 19, wherein the oily sludge mixture filtration device further comprises: a lifting assembly which is configured to control the base to lift up and down;
wherein the lifting assembly comprises: a traction rope, a pulley, a rotating shaft, and a motor; wherein the motor is fixed on the crate, an output shaft of the motor is connected with the rotating shaft to drive the rotating shaft to rotate; a number of the pulley is two, and two pulleys are rotatably connected to the crate separately; the traction rope is wound around the rotating shaft, an end of the traction rope is fixed with the rotating shaft, and another end of the traction rope is fixed with the base around the pulley.

21. The method according to claim 18, wherein the stirrer comprises: a stirring shaft, a stirring disc, and stirring teeth; wherein the stirring disc is fixed at a lower end of the stirrer; the stirring teeth are fixed in a circumferential direction of the stirring disc; and an axial direction of the stirring shaft is parallel to an axial direction of the mixing barrel, and an upper end of the stirring shaft is connected with the driving motor.

22. The method according to any one of claims 1 to 6, wherein the vacuum atmosphere rotary kiln comprises:
a box body; and
a kiln body, which is transversely arranged in the box body, provided with a hollow cavity, and configured to place the RFeB-based oily sludge waste;
an intake chamber, communicating with an end of the kiln body; wherein an axial line of the intake chamber coincides with an axial line of the kiln body;
an exhaust chamber, communicating with another end of the kiln body; wherein an axial line of the exhaust chamber coincides with an axial line of the kiln body; and
a driving device, which is arranged in the box body and configured to drive the kiln body to rotate;
wherein a pressure reliever and a vacuometer are further arranged above the kiln body; the pressure reliever communicates with an interior of the kiln body to control a pressure in the kiln body; and the vacuometer is configured to monitor a vacuum degree in the kiln body.

23. The method according to claim 22, wherein the kiln body is further internally provided with a lifting plate of a spiral structure; wherein an axial line of the lifting plate coincides with an axial line of the kiln body, and two ends of the lifting plate are fixed to inner walls at two ends of the kiln body respectively.

24. The method according to claim 22, wherein a jacking cylinder is further arranged on a side wall of the box body; and a piston rod of the jacking cylinder is connected with an end of the intake chamber or the exhaust chamber to drive the kiln body to tilt and pour out purified RFeB-based oily sludge waste in the kiln body.

25. RFeB-based oily sludge powder, prepared by using the method according to any one of claims 1 to 24.

26. Application of RFeB-based oily sludge powder prepared by using the method according to any one of claims 1 to 24 in an RFeB-based regenerated magnet.
